# EUROPEAN PATENT APPLICATION

(11) **EP 4 852 496 A1**
(43) Date of publication of application: **09.12.2026**
(21) Application number: 24920911.5
(22) Date of filing: 31.01.2024
(51) Int. Cl.: H04W 24/06

(54) **WIRELESS COMMUNICATION METHOD, AND APPARATUS, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); SHI, Zhihua, Dongguan, Guangdong 523860 (CN); LIU, Wendong, Dongguan, Guangdong 523860 (CN)
(74) Representative: Penza, Giancarlo
(86) International application number: PCT/CN2024/075069
(87) International publication number: WO 2025/160844

(57) **Abstract**

The embodiments of the present application provide a wireless communication method, and an apparatus, a device and a storage medium. The method comprises: a terminal device predicting first predicted information on the basis of one or more first measurement results, wherein the first measurement result is a measurement result obtained by means of measuring a first spatial filter, the first predicted information is related to one or more first prediction results, and the first prediction result is a measurement result, which is predicted on the basis of the one or more first measurement results, of a second spatial filter.

## Description

### TECHNICAL FIELD

Embodiments of the disclosure relate to the technical field of mobile communications, and particularly to, a wireless communication method, apparatus and device, and a storage medium.

### BACKGROUND

In the related art, the spatial filter management mainly includes measurement and reporting related to a spatial filter, and spatial filter indication performed by a network according to the reporting by a terminal device.

In order to acquire, in real time, the best or preferred spatial filter for data or control transmission, the network device may configure or activate frequent periodic or semi-persistent spatial filter reporting or trigger frequent aperiodic spatial filter reporting, which will undoubtedly result in large uplink reporting overhead and control signaling overhead.

### SUMMARY

Embodiments of the disclosure provide a wireless communication method, apparatus and device, and a storage medium.

The wireless communication method provided by the embodiment of the disclosure includes the following operation.

A terminal device predicts first prediction information based on one or more first measurement results, wherein the first measurement result is a measurement result obtained by measuring a first spatial filter, and the first prediction information is related to one or more first prediction results, the first prediction result being a measurement result of a second spatial filter predicted based on the one or more first measurement results.

The wireless communication method provided by the embodiment of the disclosure includes the following operation.

A network device receives second information sent by a terminal device, wherein the second information is used to indicate a second spatial filter management event, which is a first spatial filter management event that is to be reported, the first spatial filter management event is related to a first prediction result, and the first prediction result is a measurement result of a second spatial filter predicted based on one or more first measurement results, the first measurement result being a measurement result obtained by measuring a first spatial filter,
wherein the one or more first measurement results are used by the terminal device to predict first prediction information related to one or more first prediction results.

The wireless communication method provided by the embodiment of the disclosure includes the following operation.

A terminal device sends one or more first measurement results to a network device, wherein the first measurement result is a measurement result obtained by measuring a first spatial filter,
wherein the one or more first measurement results are used by the network device to predict first prediction information, and the first prediction information is related to one or more first prediction results, the first prediction result being a measurement result of a second spatial filter predicted based on the one or more first measurement results.

The wireless communication method provided by the embodiment of the disclosure includes the following operations.

A network device receives one or more first measurement results sent by a terminal device, wherein the first measurement result is a measurement result obtained by measuring a first spatial filter.

The network device predicts first prediction information based on the one or more first measurement results, wherein the first prediction information is related to one or more first prediction results, the first prediction result being a measurement result of a second spatial filter predicted based on the one or more first measurement results.

The terminal device provided by the embodiment of the disclosure includes a first processing unit.

The first processing unit is configured to predict first prediction information based on one or more first measurement results, wherein the first measurement result is a measurement result obtained by measuring a first spatial filter, and the first prediction information is related to one or more first prediction results, the first prediction result being a measurement result of a second spatial filter predicted based on the one or more first measurement results.

The network device provided by the embodiment of the disclosure includes a first communication unit.

The first communication unit is configured to receive second information sent by a terminal device, wherein the second information is used to indicate a second spatial filter management event, which is a first spatial filter management event that is to be reported, the first spatial filter management event is related to a first prediction result, and the first prediction result is a measurement result of a second spatial filter predicted based on one or more first measurement results, the first measurement result being a measurement result obtained by measuring a first spatial filter,
wherein the one or more first measurement results are used by the terminal device to predict first prediction information related to one or more first prediction results.

The terminal device provided by the embodiment of the disclosure includes a a second communication unit.

The second communication unit is configured to send one or more first measurement results to a network device, wherein the first measurement result is a measurement result obtained by measuring a first spatial filter,
wherein the one or more first measurement results are used by the network device to predict first prediction information, and the first prediction information is related to one or more first prediction results, the first prediction result being a measurement result of a second spatial filter predicted based on the one or more first measurement results.

The network device provided by the embodiment of the disclosure includes a third communication unit and a second processing unit.

The third communication unit is configured to receive one or more first measurement results sent by a terminal device, wherein the first measurement result is a measurement result obtained by measuring a first spatial filter.

The second processing unit is configured to predict first prediction information based on the one or more first measurement results, wherein the first prediction information is related to one or more first prediction results, the first prediction result being a measurement result of a second spatial filter predicted based on the one or more first measurement results.

The communication device provided by the embodiment of the disclosure may be the terminal device in the above scheme, and the communication device includes a processor and a memory. The memory is configured to store a computer program, and the processor is configured to call and execute the computer program stored in the memory to perform the wireless communication method performed by the terminal device.

The communication device provided by the embodiment of the disclosure may be the network device in the above scheme, and the communication device includes a processor and a memory. The memory is configured to store a computer program, and the processor is configured to call and execute the computer program stored in the memory to perform the wireless communication method performed by the network device.

The chip provided by the embodiment of the disclosure is used for performing the wireless communication method.

Specifically, the chip includes a processor configured to invoke and execute a computer program from a memory, to cause a device mounted with the chip to perform the wireless communication method.

The computer-readable storage medium provided by the embodiment of the disclosure is used for storing a computer program that causes a computer to perform the wireless communication method.

The computer program product provided by the embodiment of the disclosure includes computer program instructions that, when run on a computer, cause the computer to perform the wireless communication method.

The computer program provided by the embodiment of the disclosure, when run on a computer, causes the computer to perform the wireless communication method.

According to the above technical scheme, the terminal device determines first prediction information related to the predicted measurement results of the one or more second spatial filters based on the one or more first measurement results of the first spatial filter, so that in a case where the one or more first spatial filters are measured, the measurement results of the one or more second spatial filters are predicted, and the first prediction information is obtained based on the predicted measurement results of the one or more second spatial filters, thereby reducing the overhead of the reference signal used for performing the spatial filter measurement.

### BRIEF DESCRIPTION OF THE DRAWINGS

The accompanying drawings described herein are intended to provide a further understanding of the disclosure, and constitute a part of the disclosure, and the schematic embodiments of the disclosure and the description thereof are intended to explain the disclosure, and do not constitute an undue limitation of the disclosure. In the drawings:
FIG. 1 is a schematic diagram showing an application scenario according to an embodiment of the disclosure.
FIG. 2 is an optional schematic diagram of a neuron structure according to an embodiment of the disclosure.
FIG. 3 is an optional schematic structural diagram of a fully connected neural network according to an embodiment of the disclosure.
FIG. 4 is an optional schematic flowchart of a wireless communication method according to an embodiment of the disclosure.
FIG. 5 is an optional schematic flowchart of a wireless communication method according to an embodiment of the disclosure.
FIG. 6 is an optional schematic flowchart of a wireless communication method according to an embodiment of the disclosure.
FIG. 7 is an optional schematic flowchart of a wireless communication method according to an embodiment of the disclosure.
FIG. 8 is an optional schematic flowchart of a wireless communication method according to an embodiment of the disclosure.
FIG. 9 is an optional schematic flowchart of a wireless communication method according to an embodiment of the disclosure.
FIG. 10 is an optional schematic flowchart of a wireless communication method according to an embodiment of the disclosure.
FIG. 11 is an optional schematic flowchart of a wireless communication method according to an embodiment of the disclosure.
FIG. 12 is an optional schematic flowchart of a wireless communication method according to an embodiment of the disclosure.
FIG. 13 is an optional schematic flowchart of a wireless communication method according to an embodiment of the disclosure.
FIG. 14 is an optional schematic flowchart of a wireless communication method according to an embodiment of the disclosure.
FIG. 15 is an optional schematic flowchart of a wireless communication method according to an embodiment of the disclosure.
FIG. 16 is an optional schematic flowchart of a wireless communication method according to an embodiment of the disclosure.
FIG. 17 is an optional schematic flowchart of a wireless communication method according to an embodiment of the disclosure.
FIG. 18 is an optional schematic flowchart of a wireless communication method according to an embodiment of the disclosure.
FIG. 19 is an optional schematic diagram of a fluctuation parameter according to an embodiment of the disclosure.
FIG. 20 is an optional schematic diagram of a fluctuation parameter according to an embodiment of the disclosure.
FIG. 21 is an optional schematic diagram showing a serving beam and a candidate beam according to an embodiment of the disclosure.
FIG. 22 is an optional schematic flowchart of a wireless communication method according to an embodiment of the disclosure.
FIG. 23 is an optional scenario diagram of an output and output of a model according to an embodiment of the disclosure.
FIG. 24 is an optional schematic flowchart of a wireless communication method according to an embodiment of the disclosure.
FIG. 25 is an optional schematic structural diagram of a terminal device according to an embodiment of the disclosure.
FIG. 26 is an optional schematic structural diagram of a network device according to an embodiment of the disclosure.
FIG. 27 is an optional schematic structural diagram of a terminal device according to an embodiment of the disclosure.
FIG. 28 is an optional schematic structural diagram of a network device according to an embodiment of the disclosure.
FIG. 29 is a schematic structural diagram of a communication device according to an embodiment of the disclosure.
FIG. 30 is a schematic structural diagram of a chip according to an embodiment of the disclosure.
FIG. 31 is a schematic block diagram of a communication system according to an embodiment of the disclosure.

### DETAILED DESCRIPTION

Hereinafter, the technical solutions in the embodiments of the disclosure will be described with reference to the accompanying drawings in the embodiments of the disclosure, and it is apparent that the described embodiments are part of the embodiments of the disclosure, but not all the embodiments. Based on the embodiments in the disclosure, all other embodiments obtained by those skilled in the art without creative efforts fall within the scope of protection of the disclosure.

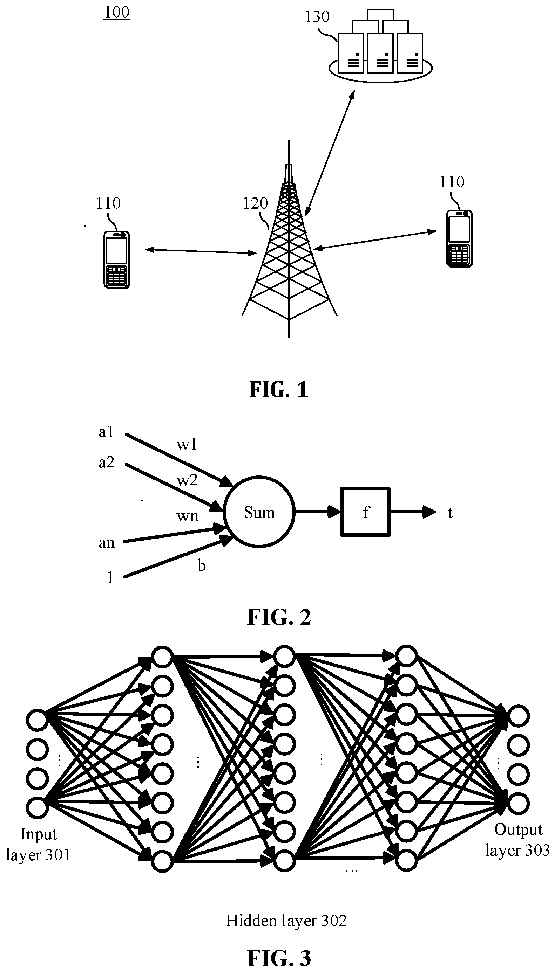

FIG. 1 is a schematic diagram showing an application scenario according to an embodiment of the disclosure.

As shown in FIG. 1, the communication system 100 includes a terminal device 110 and a network device 120. The network device 120 may communicate with the terminal device 110 through an air interface. Multi-service transmission is supported between the terminal device 110 and the network device 120.

It is to be understood that the embodiments of the present disclosure are illustrative only with the communication system 100 but are not limited thereto. That is, the technical solutions of the embodiments of the present disclosure may be applied to various communication systems, for example, a Long Term Evolution (LTE) system, an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, a 5G communication system (also called a New Radio (NR) communication system), or a future communication system, etc.

In the communication system 100 illustrated in FIG. 1, the network devices 120 may be an access network device communicating with the terminal device 110. The access network device may provide communication coverage for a particular geographic area and may communicate with the terminal device 110 (e.g. UE) located within a coverage area.

The network device 120 may be an Evolutionary Node B (eNB or eNodeB) in a Long Term Evolution (LTE) system, or a Next Generation Radio Access Network (NG RAN) device, or a base station (gNB) in an NR system, or a wireless controller in a Cloud Radio Access Network (CRAN); or the network device 120 may be a relay station, an access point, an in-vehicle device, a wearable device, a hub, a switch, a bridge, a router, or a network device in a future evolving Public Land Mobile Network (PLMN).

The terminal device 110 may be any terminal device including but not limited to a terminal device in wired or wireless connection with the network device 120 or other terminal devices.

For example, the terminal device 110 may refer to an access terminal, a User Equipment (UE), a user unit, a user station, a mobile station, a remote station, a remote terminal, a mobile device, a user terminal, a terminal device, a wireless communication device, a user agent or a user apparatus. The access terminal may be a cellular telephone, a cordless telephone, a Session Initiation Protocol (SIP) telephone, an Internet of Things (IoT) device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network or a terminal device in a future evolution network, or the like.

The terminal device may be used for Device to Device (D2D) communication.

The wireless communication system 100 may also include a core network device 130 that communicates with the base station. The core network device may be a 5G Core (5GC) device, for example, an Access and Mobility Management Function (AMF), for another example, an Authentication Server Function (AUSF), for another example, a User Plane Function (UPF), and for another example, a Session Management Function (SMF). Optionally, the core network device 130 may also be an Evolved Packet Core (EPC) device of the LTE network, for example, a Session Management Function + Core Packet Gateway (SMF+PGW-C) device. It is to be understood that SMF+PGW-C can achieve the same functions as SMF and PGW-C simultaneously. In the process of network evolution, the above core network device may also be called by other names, or a new network entity may be formed by dividing the functions of the core network, which is not limited in the embodiments of the present disclosure.

Various functional units in the communication system 100 may also establish connections therebetween through a next generation (NG) interface to realize communication.

For example, the terminal device establishes an air interface connection with the access network device through an Uu interface for transmitting user plane data and control plane signaling. The terminal device may establish a control plane signaling connection with an AMF through NG interface 1 (abbreviated as N1). The access network device such as a next generation radio access base station (gNB) may establish a user plane data connection with a UPF through an NG interface 3 (abbreviated as N3). The access network device may establish a control plane signaling connection with the AMF through NG interface 2 (abbreviated as N2). The UPF may establish a control plane signaling connection with an SMF through NG interface 4 (abbreviated as N4). UPF may interact user plane data with a data network through NG interface 6 (abbreviated as N6). The AMF may establish control plane signaling connection with the SMF through NG interface 11 (abbreviated as N11). The SMF may establish a control plane signaling connection with a PCF through NG interface 7 (abbreviated as N7).

FIG. 1 exemplarily illustrates one bast station, one core network device and two terminal devices. Optionally, the wireless communication system 100 may include multiple base station, and other numbers of terminal devices may be included within the coverage of each base station, which is not limited by the embodiments of the present disclosure.

It is to be noted that FIG. 1 is only illustrative of the system to which the present disclosure is applied, and of course, the method illustrated in the embodiments of the present disclosure can also be applied to other systems. In addition, the terms "system" and "network" are often used interchangeably herein. The term "and/or" herein is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or". It should be further understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It should be further understood that the term "correspond" mentioned in the embodiments of the present disclosure may mean that there is a direct correspondence or an indirect correspondence between two items, may also mean that there is an association relationship between the two items, and may also be a relationship such as indication and being indicated, configuration and being configured, etc. It should be further understood that the "predefined" or "predefined rule" mentioned in the embodiments of the present disclosure may be achieved by pre-storing corresponding codes, tables or other means used for indicating relevant information in devices (e.g., including terminal devices and network devices), and the specific implementation thereof is not limited in the present disclosure. For example, "predefined" may refer to what is defined in a protocol. It should be further understood that in the embodiments of the present disclosure, the "protocol" may be a standard protocol in the communication field. For example, the protocol may include an LTE protocol, an NR protocol, and related protocols applied in future communication systems, which are not limited in the present disclosure.

In order to facilitate understanding of the technical solutions of the embodiments of the disclosure, the related technologies of the embodiments of the disclosure will be described below, and the related technologies below, as optional solutions, can be arbitrarily combined with the technical solutions of the embodiments of the disclosure, and all combinations thereof belong to the scope of protection of the embodiments of the disclosure.

The NR standardizes the beam management mechanism.

The beam management includes beam-related measurement and reporting, and the network (NW) performs beam indication based on the reporting by the UE. The beam measurement is based on periodic, semi-persistent and aperiodic reference signals. The downlink reference signal is a Channel State Information-Reference Signal (CSI-RS) or a Synchronization Signal and PBCH Block (SSB). Beam reporting is associated with a measurement resource, and includes periodic beam reporting, such as reporting using Physical Uplink Control Channel (PUCCH) resources. The beam reporting may also be semi-persistent reporting, such as reporting using PUCCH or PUSCH resources, and the semi-persistent reporting may be activated or deactivated using a Media Access Control-Control Element (MAC CE). The beam reporting may also be aperiodic reporting, such as reporting using PUSCH resources and being triggered based on DCI transmitted by the NW.

When the NW receives the beam reporting from the UE, the NW may indicate a beam to the UE, that is, indicate a unified Transmission Configuration Indication (TCI) state (for single TRP) or a set of TCI states (for multi-TRP). The TCI state can be a legacy TCI or a unified TCI state. Either type of TCI state may contain a downlink reference signal (suitable for downlink and uplink transmissions) or an uplink reference signal (suitable for uplink transmissions). The Quasi Co-Location (QCL) Type of the reference signal is the Type D, which is dedicated to indicating a QCL relationship, that is, a beam relationship, between different reference signals.

In summary, the above-mentioned conventional beam management mechanism is based on measurement and reporting by the UE and indication by the NW, and belongs to re-active beam management. This mechanism has certain delays for the real-time channel changes. Therefore, embodiments of the disclosure propose a beam management mechanism based on AI/ML prediction, which belongs to a proactive method.

### Artificial Intelligence (AI) /Machine Learning (ML) model

A neural network is an operation model composed of multiple neuron nodes connected to each other, where the connection between nodes represents a weighted value (called weight) from an input signal to an output signal; each node performs a weighted sum of different input signals and outputs them through a specific activation function. The neuron structure is shown in FIG. 2, and the weighted sum (sum) of a1 to an and 1 is performed by the weights w1 to wn and b, respectively, and the result of the weighted sum is output by the activation function f to obtain t.

A simple neural network is shown in FIG. 3, which includes an input layer 301, a hidden layer 302 and an output layer 303. Through different connection manners, weights and activation functions of multiple neurons, different outputs can be produced to fit the mapping relationship from input to output. Each upper-level node is connected to all nodes at a next level. This fully connected model can also be called a Deep Neural Network (DNN). The Neural Network (NN) model can perform beam prediction in spatial domain.

An NN model is obtained by training through the processes of data set construction, training, validation and testing. It is assumed that the NN models have been trained in advance by offline training or online training. It should be noted that offline training and online training are not mutually exclusive. The NW may first obtain a static training result through a dataset offline training, and such a process may be referred to as the offline training herein. During the use of NN by the NW or UE, as the UE further performs measurements and/or reporting, the NN model can continue to collect more data and perform real-time online training to optimize the parameters of the NN model, thus achieving better inference and prediction results.

In the embodiment of the disclosure, the literal meaning of "beam (pair)" means "beam" or "beam pair". Specifically, the beam in the embodiments of the present disclosure may refer to a transmitting beam or a receiving beam, and the beam pair may refer to a pair of transmitting beam and receiving beam. In protocols, transmit/receive spatial filters are typically used instead of transmitting/receiving beams, i.e. beams are interchangeable with the use of "spatial filters".

For the model, its output can be understood as inference or prediction, and in the embodiments of the disclosure, inference and prediction mean the same meaning and can be interchanged.

In the beam management process of the related art, in order to acquire, in real time, the best or preferred spatial filter for data or control transmission, the network device may configure or activate frequent periodic or semi-persistent spatial filter reporting or trigger frequent aperiodic spatial filter reporting. However, this will undoubtedly result in large uplink reporting overhead and control signaling overhead. Moreover, if the configured beam reporting is less frequent, the NW may not always get the "best/preferred" beam because the beam reports of the UE may be outdated, which will lead to performance degradation.

The above is a major work content of MIMO standardization. For the description of this part of the work, the focus of standardization lies in UE-initiated or event-triggered beam reporting. It includes the uplink signaling content used for beam reporting, as well as the medium or bearer used to carry it. However, the disadvantage is that in order to observe a predefined beam event, the UE still needs a large number of measurements, because the UE cannot simultaneously measure multiple analog beams in one time unit (for example, on one OFDM symbol). Therefore, for the UE, a large number of measurements bring large resource overhead and delay overhead.

In order to facilitate understanding of the technical solutions of the embodiments of the disclosure, the technical solutions of the disclosure will be described in detail below with reference to specific examples. As optional solutions, the above related technologies can be arbitrarily combined with the technical solutions of the embodiments of the disclosure, and all combinations thereof belong to the scope of protection of the embodiments of the disclosure. Embodiments of the disclosure include at least some of the following contents.

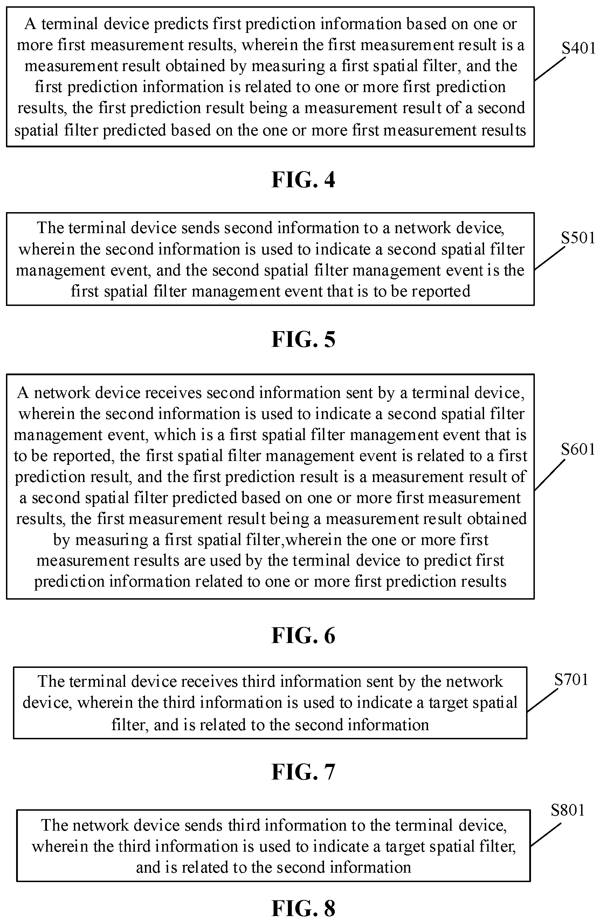

The wireless communication method provided by the embodiment of the disclosure is applied to a terminal device. As shown in FIG. 4, the method includes the following operations.

In an operation S401, a terminal device predicts first prediction information based on one or more first measurement results, wherein the first measurement result is a measurement result obtained by measuring a first spatial filter, and the first prediction information is related to one or more first prediction results, the first prediction result being a measurement result of a second spatial filter predicted based on the one or more first measurement results.

The terminal device measures a first number of first spatial filters, and obtains a measurement result of each first spatial filter among the first number of first spatial filters, that is, obtains the first number of first measurement results. The first number is an integer greater than or equal to 1. It is to be understood that one measurement resource corresponds to one spatial filter.

The first measurement result in the embodiments of the disclosure may be a measurement result obtained by performing layer 1 measurement on the first spatial filter, and the first measurement result may include one or more of: L1-Reference Signal Receiving Power (RSRP), L1-Reference Signal Receiving Power (RSRQ), L1-Received Signal Strength Indication (RSSI), L1-Signal to Interference plus Noise Ratio (SINR), and Signal-to-Noise Ratio (SNR).

The measurement resource of the first spatial filter may be a Channel State Information-Reference Signal (CSI-RS) resource or a Synchronization Signal and PBCH Block (SSB) resource.

After determining the first number of first measurement results, the terminal device predicts the first prediction information based on the first number of first measurement results. Herein, the first prediction information is related to the first prediction result. It is to be understood that the first prediction information is determined based on the first prediction result.

The first prediction result(s) is/are measurement result(s) of the second spatial filter predicted based on the first number of first measurement results. Herein, the first number of first measurement results may be used to predict one or more first prediction results, and different first prediction results among a plurality of first prediction results correspond to different second spatial filters. It is to be understood that the first prediction result is a measurement result of the second spatial filter, but the first prediction result is not a measurement result obtained by measuring the second spatial filter, but a measurement result predicted or inferred based on the first number of first measurement results.

It is to be appreciated that the second spatial filter belongs to or does not belong to the first number of first spatial filters.

In an example, the terminal device obtains first prediction information related to prediction results of a beam 4 and a beam 5 based on the measurement results of a beam 1, a beam 2 and a beam 3. Herein, the prediction results of the beam 4 and the beam 5 are obtained by prediction based on the measurement results of the beam 1, the beam 2, and the beam 3.

In an example, the terminal device obtains first prediction information related to prediction results of a beam 3 and a beam 4 based on the measurement results of a beam 1, a beam 2 and the beam 3. Herein, the prediction results of the beam 3 and the beam 4 are obtained by prediction based on the measurement results of the beam 1, the beam 2, and the beam 3.

It is to be understood that a beam may be a serving beam or a candidate beam of the terminal device. Herein, the serving beam is a beam of a serving cell of the terminal device, and the candidate beam may be a beam of the serving cell or a beam of the candidate cell.

In some embodiments, a first prediction model is deployed in the terminal device, and the first prediction model can take various forms, such as a function, a deep learning model, or a neural network model (e.g., DNN, CNN, RNN). The terminal device inputs a first number of first measurement results into the first prediction model, and obtains first prediction information output by the first prediction model.

In the wireless communication method according to the embodiment of the disclosure, the terminal device determines first prediction information related to the predicted measurement results of the one or more second spatial filters based on the one or more first measurement results, so that in a case where the one or more first spatial filters are measured, the measurement results of the one or more second spatial filters are predicted, and the first prediction information is obtained based on the predicted measurement results of the one or more second spatial filters. In this way, the first prediction information is obtained without the need to measure the one or more second spatial filter, thereby reducing the overhead of the reference signal used for performing the spatial filter measurement.

In some embodiments, based on FIG. 4, the embodiment of the disclosure provides a wireless communication method, applied to a terminal device. As shown in FIG. 5, the method includes the following operation.

In an operation S501, the terminal device sends second information to a network device, wherein the second information is used to indicate a second spatial filter management event, and the second spatial filter management event is the first spatial filter management event that is to be reported.

The first prediction information includes a first spatial filter management event, and the first spatial filter management event is a spatial filter management event related to the first prediction result. The spatial filter management event may be understood as an event related to management of a spatial filter of the terminal device.

In some embodiments, based on FIG. 4, the embodiment of the disclosure provides a wireless communication method, applied to a terminal device. As shown in FIG. 5, the method includes the following operation.

In some embodiments, the embodiment of the disclosure provides a wireless communication method, applied to a network device. As shown in FIG. 6, the method includes the following operation.

In an operation S601, a network device receives second information sent by a terminal device, wherein the second information is used to indicate a second spatial filter management event, which is a first spatial filter management event that is to be reported, the first spatial filter management event is related to a first prediction result, and the first prediction result is a measurement result of a second spatial filter predicted based on one or more first measurement results, the first measurement result being a measurement result obtained by measuring a first spatial filter.

Herein, the one or more first measurement results are used by the terminal device to predict first prediction information related to one or more first prediction results.

Hereinafter, the wireless communication method illustrated in FIG. 5 or FIG. 6 will be further described.

When the terminal device determines that the first spatial filter management event occurs with respect to the terminal device based on the first prediction result, and the occurred first spatial filter management event needs to be reported, then the terminal device needs to report the first spatial filter management event to be reported to the network device. At this time, the terminal device sends second information to the network device, and the second information is used to indicate the first spatial filter management event to be reported, i.e., the second spatial filter management event.

The network device receives the second information sent by the terminal device, and determines based on the second information that the second spatial filter management event occurs with respect to the terminal device.

It is to be understood that the terminal device may determine one or more first spatial filter management events based on the first prediction result, and all or a part of the determined one or more first spatial filter management events are second spatial filter management events.

In the embodiment of the disclosure, if the terminal device predicts the second spatial filter management event based on one or more first measurement results, the terminal device can directly report the second spatial filter management event to the network device without reporting the first measurement results to the network device, thereby reducing signaling overhead.

In some embodiments, the first prediction information includes one or more of:
first indication information for indicating whether one or more first spatial filter management events have occurred, the first spatial filter management event being related to the first prediction result;
second indication information for indicating an event type of the first spatial filter management event that has occurred;
first information of a serving spatial filter corresponding to the first spatial filter management event; and
first information of a candidate spatial filter corresponding to the first spatial filter management event;
a Timing Advance (TA) of the candidate spatial filter corresponding to the first spatial filter management event; and
a power control parameter of the candidate spatial filter corresponding to the first spatial filter management event.

In the embodiment of the disclosure, the first indication information may be used to indicate whether one or more first spatial filter management events occur with respect to the terminal device.

It is to be appreciated that different values of the first indication information are used to indicate that one or more first spatial filter management events have occurred, or that no first spatial filter management events have occurred.

In the embodiment of the disclosure, if the first prediction information includes the second indication information, the first prediction information may or may not include the first indication information.

In some embodiments, the one or more first spatial filter management events are spatial filter management events configured or preset by a network device. In this case, the first indication information is used to indicate whether the spatial filter management event configured or preset by the network device occurs.

If a first spatial filter management event occurs, the second indication information is used to indicate which first spatial filter management event occurs. It is to be understood that if a plurality of first spatial filter management events occur, the first prediction information includes a plurality of pieces of second indication information, and different second indication information indicates event types of different first spatial filter management events.

If the spatial filters corresponding to the occurred first spatial filter management event include a serving spatial filter, the first prediction information may include first information of the serving spatial filter corresponding to the occurred first spatial filter management event.

If the spatial filters corresponding to the occurred first spatial filter management event include a candidate spatial filter, the first prediction information may include one or more of: first information, a TA and a power control parameter of the candidate spatial filter corresponding to the occurred first spatial filter management event. It is to be appreciated that the TA and power control parameter of the candidate spatial filters are only applicable to transmission of the uplink channel and signal.

In some embodiments, the one or more first spatial filter management events include one or more of:
event A, i.e., one or more second spatial filters corresponding to the one or more first spatial filter management events include a serving spatial filter, and performance of the serving spatial filter is better than a first threshold;
event B, i.e., the one or more second spatial filters include the serving spatial filter, and the performance of the serving spatial filter is weaker than a second threshold;
event C, i.e., the one or more second spatial filters include a candidate spatial filter of a serving cell and the serving spatial filter, and performance of the candidate spatial filter of the serving cell is better than first spatial filter performance, the first spatial filter performance being the performance of the serving spatial filter plus a first offset amount;
event D, i.e., the one or more second spatial filters include a candidate spatial filter of a candidate cell and the serving spatial filter, and performance of the candidate spatial filter of the candidate cell is better than second spatial filter performance, the second spatial filter performance being the performance of the serving spatial filter plus a second offset amount;
event E, i.e., the one or more second spatial filters include the candidate spatial filter of the serving cell, and the performance of the candidate spatial filter of the serving cell is better than a third threshold;
event B, i.e., the one or more second spatial filters include the candidate spatial filter of the candidate cell, and the performance of the candidate spatial filter of the candidate cell is better than a fourth threshold;
event F, i.e., the one or more second spatial filters include the serving spatial filter and the candidate spatial filter of the serving cell, the performance of the serving spatial filter is weaker than a fifth threshold, and the performance of the candidate spatial filter of the serving cell is better than a sixth threshold;
event G, i.e., the one or more second spatial filters include the serving spatial filter and the candidate spatial filter of the candidate cell, the performance of the serving spatial filter is weaker than a seventh threshold, and the performance of the candidate spatial filter of the candidate cell is better than an eighth threshold;
event H, i.e., the one or more second spatial filters include the serving spatial filter, and a performance fluctuation of the serving spatial filter exceeds a first range;
event I, i.e., the one or more second spatial filters include the candidate spatial filter of the serving cell, and an interference of the candidate spatial filter of the serving cell is stronger than a first interference threshold; and
event J, i.e., the one or more second spatial filters include the candidate spatial filter of the candidate cell, and an interference of the candidate spatial filter of the candidate cell is stronger than a second interference threshold.

Among the plurality of thresholds involved in the event A to the first event J, different thresholds may have a same value or different values.

In the embodiment of the disclosure, the performance of the spatial filter may be represented by one or more parameters characterizing the link quality of the cell, including L1-RSRP, L1-RSRQ, L1-RSSI, L1-SINR, and SNR of the spatial filter.

It is to be understood that if there are the first measurement result and the first prediction result of the second spatial filter, the terminal device may determine whether the first spatial filter management event occurs with respect to the second spatial filter, according to the first measurement result and/or the first prediction result of the second spatial filter. Optionally, the terminal device determines whether the first spatial filter management event occurs with respect to the second spatial filter, according to the first measurement result of the second spatial filter. Optionally, the terminal device determines whether the first spatial filter management event occurs with respect to the second spatial filter, according to the first prediction result of the second spatial filter. Optionally, the terminal device determines whether the first spatial filter management event occurs with respect to the second spatial filter, according to a result having better link performance among the first measurement result and the first prediction result of the second spatial filter.

In some embodiments, the performance fluctuation includes one or more of:
a first fluctuation parameter, i.e., a number of times that a link quality fluctuates at a ninth threshold within a first time length;
a second fluctuation parameter, i.e., a duration for which the link quality is less than a tenth threshold within a second time length; and
a third fluctuation parameter, i.e., a ratio of a duration for which the link quality is less than an eleventh threshold within a third time length to a total time length.

For the first fluctuation parameter, the first time length is a specific time length determined through a first time window. The first fluctuation parameter is the number of times that the link quality fluctuates at the ninth threshold within the first time window.

The number of times that the link quality fluctuates at the ninth threshold may include: a number of times that the link quality goes from a value greater than the ninth threshold to a value less than the ninth threshold, and/or a number of times that the link quality goes from the value less than the ninth threshold to the value greater than the ninth threshold.

For the second fluctuation parameter, the second time length is a specific time length determined through a second time window. The second fluctuation parameter is a duration for which the link quality is less than the tenth threshold within the specific time length.

It is to be appreciated that a duration for which the link quality is less than the tenth threshold may be a time length of one time period or a sum of time lengths of multiple time periods, where the link quality is less than the tenth threshold within the time period(s).

For the third fluctuation parameter, the third time length is a specific time length determined through a third time window. The third fluctuation parameter is a ratio of a duration for which the link quality is less than the specific threshold (i.e., the tenth threshold) within the specific time length to the total time length.

In some embodiments, the first information includes one or more of:
a cell index;
a spatial filter index; and
a spatial filter link quality.

In the embodiment of the disclosure, when the spatial filter to which the first information belongs is the spatial filter of the serving cell, the cell index of the serving cell may not be included in the first information.

In an example, the first prediction information determined by the terminal device based on the one or more first measurement results includes one or more of:
an event type of event G;
an index of a candidate beam;
link quality of the candidate beam;
an index of a serving beam; and
link quality of the serving beam.

Herein, if the candidate beam comes from a non-serving cell, that is, a candidate cell, the first prediction information further includes an index of the candidate cell, for example, information such as a Physical Cell Identity (PCI) different from the serving cell.

It is to be noted that, after predicting the first prediction information, the terminal device may report, to the network device, an occurred first spatial filter management event indicated by the first prediction information, or may report, to the network device, a first spatial filter management event for reporting (i.e., the second spatial filter management event) among the occurred first spatial filter management events indicated by the first prediction information.

In an example, the spatial filter management events for reporting include an event B, an event C, and an event D. If the first prediction information indicates that an event A occurs, the terminal device does not send the second information, and at this time, the network device does not receive the second information.

In an example, the spatial filter management events for reporting include an event B, an event C, and an event D. If the first prediction information indicates that the event B occurs, the terminal device sends second information, and the sent second information indicates the event B.

In an example, the reported spatial filter management events include an event B, an event C, and an event D, and the first prediction information indicates that the event B and the event D have occurred, the terminal device sends second information, and the sent second information indicates the event B and the event D.

In some embodiments, the second spatial filter management event is:
determined by the terminal device; or,
indicated by the network device; or,
predefined.

If the second spatial filter management event is determined by the terminal device, the terminal device may determine, at its own discretion, whether to report the first prediction result of the spatial filter management event.

If the second spatial filter management event is indicated by the network device, the terminal device reports the first prediction result of the spatial filter management event according to the configuration or indication of the network device.

If the second spatial filter management event is predefined, the terminal device reports the first prediction result of the spatial filter management event according to the predefinition in the protocol.

In an example, when the first prediction information indicates that the event A occurs, the terminal device does not need to report it, nor does it need to trigger a subsequent spatial filter management operation.

In an example, when the first prediction information indicates that the event C occurs, the terminal reports the first prediction result of the event C.

In some embodiments, the second information is transmitted through Uplink Control Information (UCI) or an MAC CE.

In an example, uplink signaling carrying the second information may be reported using UCI of the physical layer. Herein, the UCI may be carried on the PUCCH of the physical layer.

In an example, the UE may use the MAC CE to carry the reporting of the second information. Herein, the MAC CE may be carried on the PUSCH of the physical layer.

In some embodiments, for one second spatial filter management event, the second information includes one or more of:
third indication information for indicating an event type of the second spatial filter management event;
first information of a serving spatial filter corresponding to the second spatial filter management event;
first information of a candidate spatial filter corresponding to the second spatial filter management event;
a TA of the candidate spatial filter corresponding to the second spatial filter management event; and
a power control parameter of the candidate spatial filter corresponding to the second spatial filter management event.

It is to be appreciated that for the second spatial filter management event, the reported content includes, but is not limited to, one or more of the following information:
a second spatial filter manages the type of event;
an index of a candidate spatial filter in a case where the candidate spatial filter exists in the second spatial filter management event;
an index of a serving spatial filter in a case where the serving spatial filter exists in the second spatial filter management event;
a link quality of the candidate spatial filter in the case where the candidate spatial filter exists in the second spatial filter management event;
an link quality of the serving spatial filter in the case where the serving spatial filter exists in the second spatial filter management event;
a TA of the candidate spatial filter in the case where the candidate spatial filter exists in the second spatial filter management event; and
a power control parameter of the candidate spatial filter in the case where the candidate spatial filter exists in the second spatial filter management event.

In some embodiments, the terminal device receives first configuration information sent by the network device, wherein the first configuration information is used to configure a first uplink resource, the first uplink resource being used to transmit the second information.

In some embodiments, the network device sends first configuration information to the terminal device, wherein the first configuration information is used to configure a first uplink resource, the first uplink resource being used to transmit the second information.

A resource used by the terminal device to report the second information is the first uplink resource, and the first uplink resource is configured by the network device based on the first configuration information.

It is to be understood that the network device may actively send the first configuration information to the terminal device, or may send the first configuration information to the terminal device based on a request of the terminal device.

In some embodiments, the terminal device sends a first request to the network device, the first request being used to request the first uplink resource.

In some embodiments, the network device receives a first request sent by the terminal device, the first request being used to request the first uplink resource.

The terminal device sends a first request to the network device to request the network device to configure the first uplink resource. The network device receives the first request sent by the terminal device, and returns the first configuration information to the terminal device in response to the first request.

The terminal device sends a first request to request the network device to schedule the first uplink resource to the terminal device. The first request may be a scheduling request (SR).

After receiving the first request, the network device may send uplink scheduling Downlink Control Information (DCI) to the terminal device, and the uplink scheduling DCI is used to schedule the first uplink resource.

In some embodiments, the first request is sent before or after the second spatial filter management event is determined.

If the first request is sent before the second spatial filter management event is determined, the terminal device requests the first uplink resource to the network device in advance in a case where the second spatial filter management event is not determined yet, thereby requesting the first uplink resource in advance, and reporting the prediction result to the network device earlier.

If the first request is sent after the second spatial filter management event is determined, the terminal device may send the first request to the network device in a case where the second spatial filter management event is determined, so as to request the first uplink resource.

In some embodiments, based on FIG. 5, the embodiment of the disclosure provides a wireless communication method, applied to a terminal device. As shown in FIG. 7, the method includes the following operation.

In an operation S701, the terminal device receives third information sent by the network device, wherein the third information is used to indicate a target spatial filter, and is related to the second information.

In some embodiments, based on FIG. 6, the embodiment of the disclosure provides a wireless communication method, applied to a network device. As shown in FIG. 8, the method includes the following operation.

In an operation S801, the network device sends third information to the terminal device, wherein the third information is used to indicate a target spatial filter, and is related to the second information.

After receiving the second information sent by the terminal device, in response to the second information, the network device determines the third information based on the second information or not based on the second information, and sends the third information to the terminal device. Herein, the third information is used to indicate the target spatial filter.

Optionally, the third information is a TCI state, and the network device indicates one new TCI state or a set of new TCI states to the terminal device through a beam indication mechanism. Herein, one TCI state corresponds to one joint (uplink and downlink) TCI state, that is, a group of TCI states corresponds to one uplink TCI state and one downlink TCI state. The spatial filter included in the TCI state indicated by the network device is the target spatial filter.

In the embodiment of the disclosure, the target spatial filter indicated by the third information may or may not belong to the first spatial filter. It is to be understood that if the target spatial filter belongs to the first spatial filter, the terminal device has measured the target spatial filter; if the target spatial filter does not belong to the first spatial filter, the terminal device has not measured the target spatial filter.

In some embodiments, if the target spatial filter does not belong to the first spatial filter, the third information is further used to indicate a first measurement resource that is used for measurement of the target spatial filter and/or reporting of measurement results.

In a case where the target spatial filter indicated by the third information is a spatial filter that has not been measured by the terminal device before, the third information may additionally indicate a set of measurement resources, that is, the first measurement resources, and the terminal device may perform measurement and/or reporting of the target spatial filter through the first measurement resources. Herein, the first measurement resource may include a CSI-RS resource and/or an SSB resource.

In an example, the terminal device may implement downlink synchronization by measurement of the SSB resource included in the first measurement resource, adjust a reception spatial filter for downlink, or the like.

In an example, the terminal device may track the time and frequency by measuring the CSI-RS of the target spatial filter, or may acquire the CSI information of the spatial filter in advance and feed it back to the network device.

Optionally, the terminal device may calculate the path loss compensation in the uplink power control by measuring the downlink reference signal as the path loss reference signal.

In the embodiment of the disclosure, the terminal device may determine how to receive a new beam associated with the TCI state indicated by the network device by measuring the first measurement resource, so that the terminal device adapts to the updated serving beam (which was previously a candidate beam), i.e., the target beam, at the fastest speed.

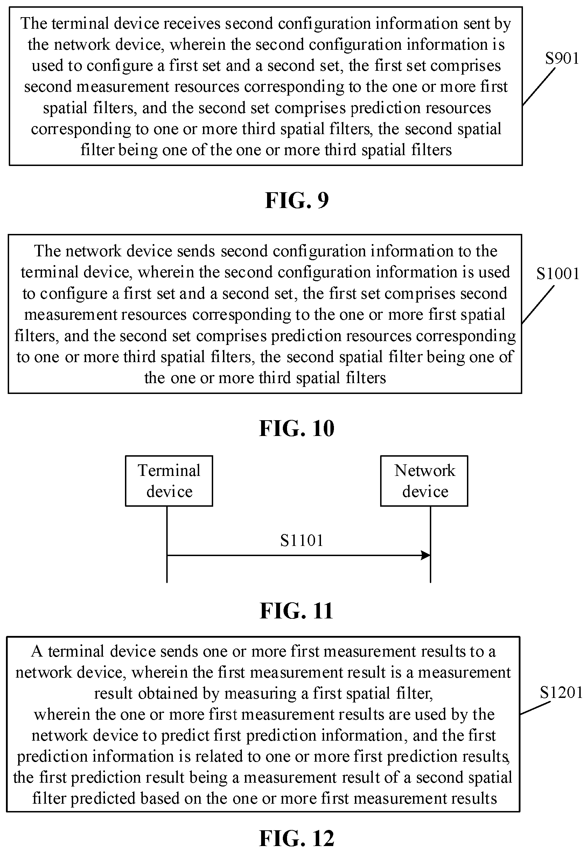

In some embodiments, based on FIG. 4 or 5 or 7, the embodiment of the disclosure provides a wireless communication method. As shown in FIG. 9, the method includes the following operation.

In an operation S901, the terminal device receives second configuration information sent by the network device, wherein the second configuration information is used to configure a first set and a second set, the first set includes second measurement resources corresponding to the one or more first spatial filters, and the second set includes prediction resources corresponding to one or more third spatial filters, the second spatial filter being one of the one or more third spatial filters.

In some embodiments, based on FIG. 6 or 8, the embodiment of the disclosure provides a wireless communication method. As shown in FIG. 10, the method includes the following operation.

In an operation S1001, the network device sends second configuration information to the terminal device, wherein the second configuration information is used to configure a first set and a second set, the first set includes second measurement resources corresponding to the one or more first spatial filters, and the second set includes prediction resources corresponding to one or more third spatial filters, the second spatial filter being one of the one or more third spatial filters.

The first set may be denoted as a measurement set Set B including a first number of measurement resources of the first spatial filter, i.e. the second measurement resources.

The second set may be denoted as a prediction set Set A including a second number of measurement resources of the third spatial filter, i.e. the prediction resources,

It is to be understood that the second spatial filter corresponding to the first prediction result belongs to the second number of third spatial filters corresponding to the second set, wherein the spatial filters corresponding to the first prediction information include some or all of the spatial filters among the second number of third spatial filters. That is to say, the second spatial filter corresponding to the first prediction result should be selected from a third cell corresponding to the prediction set Set A.

In some embodiments, no identical resource exists between the second measurement resources included in the first set and the prediction resources included in the second set.

Herein, the Set B and the Set A may be different.

In an example, the Set B includes SSB-based wide beams (which are of a smaller number, such as 8 downlink transmitting beams), while the Set A includes CSI-RS-based narrow beams (which are of a larger number, such as 64 downlink transmitting beams).

In some embodiments, the first set is a subset of the second set.

Herein, the Set B may be a subset of the Set A.

In an example, the Set A includes all of the beams (pairs) of the cell, and the Set B includes a part of the beams (pairs) of the cell.

In an example, for a downlink transmitting beam, it is assumed that the Set A has downlink reference signal resources corresponding to 64 transmitting beams, and the Set B has only downlink reference signal resources corresponding to 8 transmiting beams.

In an example, for a downlink transmitting/receiving beam pair, it is assumed that the Set A has 256 downlink reference signal resources corresponding to transmitting/receiving beam pairs, and the Set B has only 32 downlink reference signal resources corresponding to the transmitting/receiving beam pairs.

In the embodiment of the disclosure, when the first set is a subset of the second set, the overhead and the delay of measurement can be reduced.

In some embodiments, the second configuration information is further used to configure one or more of:
a third spatial filter management event, which is a spatial filter management event for which the one or more first measurement results are used for prediction; and
a first uplink resource or a second uplink resource, wherein the first uplink resource is used to report a spatial filter management event, and the second uplink resource is used to transmit a first request that is used to request the first uplink resource.

The third spatial filter management event is a spatial filter management event that can be predicted based on the one or more first measurement results.

The first uplink resource is a resource for reporting the second spatial filter management event by the terminal device. The second uplink resource is a resource used when the terminal device requests the first uplink resource.

It is to be understood that when the first uplink resource is configured by the second configuration information, the terminal device reports the second spatial filter management event based on the first uplink resource configured by the second configuration information. If the first uplink resource is not configured by the second configuration information, the terminal device sends a first request based on the second uplink resource configured by the second configuration information to request the network device to schedule the first uplink resource for the terminal device.

In some embodiments, based on FIG. 4 or 5 or 7 or 9, the embodiment of the disclosure provides a wireless communication method. As shown in FIG. 11, the method includes the following operation.

In an operation S1101, the terminal device sends fourth information to a network device, wherein the fourth information is used to indicate one or more of following capabilities of the terminal device:
whether the terminal device supports obtaining the one or more first measurement results through measurement and/or supports predicting the first prediction information based on the one or more first measurement results;
one or more fourth spatial filter management events, which are spatial filter management event supported being predicted by the one or more first measurement results;
a first number, which is a number of second measurement resources supported by the terminal device on one carrier, the second measurement resources corresponding to the first spatial filter;
a second number, which is a number of prediction resources supported by the terminal device on one carrier, the prediction resources corresponding to the second spatial filter;
a third number, which is a number of the second measurement resources supported by the terminal device on all carriers; and
a fourth number, which is a number of the prediction resources supported by the terminal device on all carriers.

In some embodiments, based on FIG. 6 or 8 or 10, the embodiment of the disclosure provides a wireless communication method, applied to a network device. As shown in FIG. 11, the method includes the following operation.

In an operation S1101, the network device receives fourth information sent by the terminal device, wherein the fourth information is used to indicate one or more of following capabilities of the terminal device:
whether the terminal device supports obtaining the one or more first measurement results through measurement and/or supports predicting the first prediction information based on the one or more first measurement results;
one or more fourth spatial filter management events, which are spatial filter management event supported being predicted by the one or more first measurement results;
a first number, which is a number of second measurement resources supported by the terminal device on one carrier, the second measurement resources corresponding to the first spatial filter;
a second number, which is a number of prediction resources supported by the terminal device on one carrier, the prediction resources corresponding to the second spatial filter;
a third number, which is a number of the second measurement resources supported by the terminal device on all carriers; and
a fourth number, which is a number of the prediction resources supported by the terminal device on all carriers.

In the embodiment of the disclosure, the terminal device reports, based on the fourth information, measurement and prediction capabilities supported by the terminal device to the network device.

Herein, the first spatial filter management event, the second spatial filter management event, the third spatial filter management event and the fourth spatial filter management event are described as follows.

The first spatial filter management event is a spatial filter management event that is predicted by the terminal device based on the one or more first measurement results.

The second spatial filter management event is a spatial filter management event to be reported, which is predicted by the terminal device based on the one or more first measurement results.

The third spatial filter management event is a spatial filter management event that is configured by the network device and that can be predicted by the terminal device based on the one or more first measurement results.

The fourth spatial filter management event is a spatial filter management event that the terminal device supports predicting.

Optionally, the fourth information includes fifth indication information for indicating whether the terminal device supports obtaining the one or more first measurement results through measurement and/or supports predicting the first prediction information based on the one or more first measurement results. If the fourth indication information indicates that the terminal device supports obtaining the one or more first measurement results through measurement and supports predicting the first prediction information based on the one or more first measurement results, the fourth information is used to indicate other contents, or the fourth information does not include the fourth indication information. If other contents are indicated, it is assumed by default that the terminal device supports obtaining the one or more first measurement results through measurement and supports predicting the first prediction information based on the one or more first measurement results.

In the embodiment of the disclosure, after receiving the fourth information, the network device may perform configuration of the first set and/or the second set based on the fourth information.

The embodiment of the disclosure provides a wireless communication method applied to a terminal device. As shown in FIG. 12, the method includes the following operation.

In an operation S1201, a terminal device sends one or more first measurement results to a network device, wherein the first measurement result is a measurement result obtained by measuring a first spatial filter.

Herein, the one or more first measurement results are used by the network device to predict first prediction information, and the first prediction information is related to one or more first prediction results, the first prediction result being a measurement result of a second spatial filter predicted based on the one or more first measurement results.

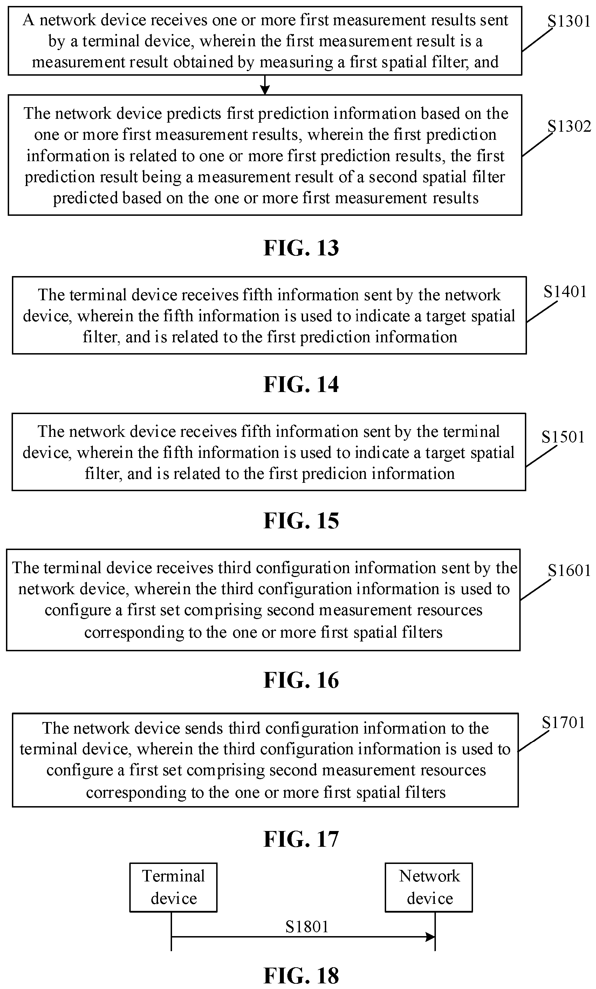

The embodiment of the disclosure provides a wireless communication method applied to a terminal device. As shown in FIG. 13, the method includes the following operations.

In an operation S1301, a network device receives one or more first measurement results sent by a terminal device, wherein the first measurement result is a measurement result obtained by measuring a first spatial filter.

In an operation S1302, the network device predicts first prediction information based on the one or more first measurement results, wherein the first prediction information is related to one or more first prediction results, the first prediction result being a measurement result of a second spatial filter predicted based on the one or more first measurement results.

The terminal device measures a first number of first spatial filters, and obtains a measurement result of each first spatial filter among the first number of first spatial filters, that is, obtains the first number of first measurement results. The first number is an integer greater than or equal to 1. It is to be understood that one measurement resource corresponds to one spatial filter.

The first measurement result in the embodiment of the disclosure may be a measurement result obtained by performing layer 1 measurement on the first spatial filter, and the first measurement result may include one or more of L1-RSRP, L1-RSRQ, L1-RSSI, L1-SINR, and SNR.

The measurement resources of the first spatial filter may be CSI-RS resources and/or SSB resources.

After determining the first number of first measurement results, the terminal device reports the first number of first measurement results to the network device for the network device to predict the first prediction information according to the first number of first measurement results.

The first number of first measurement results may be reported to the network device by uplink signaling. In some embodiments, the uplink signaling is reported in Uplink Control Information (UCI) of the physical layer in the form of spatial filter reporting. The UCI may be carried by a PUCCH or a Physical Uplink Shared Channel (PUSCH). The uplink signaling may also be MAC CE or RRC signaling.

After receiving the first number of first measurement results, the network device predicts the first prediction information based on the first number of first measurement results. Herein, the first prediction information is related to the first prediction result. It is to be understood that the first prediction information is determined based on the first prediction result.

The first prediction result(s) is/are measurement result(s) of the second spatial filter predicted based on the first number of first measurement results. Herein, the first number of first measurement results may be used to predict one or more first prediction results, and different first prediction results among a plurality of first prediction results correspond to different second spatial filters. It is to be understood that the first prediction result is a measurement result of the second spatial filter, but the first prediction result is not a measurement result obtained by measuring the second spatial filter, but a measurement result predicted or inferred based on the first number of first measurement results.

It is to be appreciated that the second spatial filter belongs to or does not belong to the first number of first spatial filters.

In an example, the network device obtains first prediction information related to prediction results of a beam 4 and a beam 5 based on the measurement results of a beam 1, a beam 2 and a beam 3. Herein, the prediction results of the beam 4 and the beam 5 are obtained by prediction based on the measurement results of the beam 1, the beam 2, and the beam 3.

In an example, the network device obtains first prediction information related to prediction results of a beam 3 and a beam 4 based on the measurement results of a beam 1, a beam 2 and the beam 3. Herein, the prediction results of the beam 3 and the beam 4 are obtained by prediction based on the measurement results of the beam 1, the beam 2, and the beam 3.

It is to be understood that a beam may be a serving beam or a candidate beam of the terminal device. Herein, the serving beam is a beam of a serving cell of the terminal device, and the candidate beam may be a beam of the serving cell or a beam of the candidate cell.

In some embodiments, a second prediction model is deployed in the network device, and the second prediction model can take various forms, such as a function, a deep learning model, or a neural network model (e.g., DNN, CNN, RNN). The network device inputs a first number of first measurement results into the second prediction model, and obtains first prediction information output by the second prediction model.

It is to be understood that the first prediction model and the second prediction model are prediction models respectively deployed on the terminal device and the network device sides, and the structures of the first prediction model and the second prediction model are the same or different.

In the wireless communication method provided by the embodiment of the disclosure, the terminal device performs measurement to obtain the first number of first measurement results and reports the measurement results to a network device, and the network device determines, based on the one or more first measurement results, first prediction information related to predicted measurement results of one or more second cells, thereby obtaining the first prediction information without the need to measure the one or more second cells, and reducing the overhead of a reference signal for spatial filter measurement.

In some embodiments, the first prediction information includes one or more of:
first indication information for indicating whether one or more first spatial filter management events have occurred, the first spatial filter management event being related to the first prediction result;
second indication information for indicating an event type of the first spatial filter management event;
first information of a serving spatial filter corresponding to the first spatial filter management event; and
first information of a candidate spatial filter corresponding to the first spatial filter management event.

In the embodiment of the disclosure, the first indication information may be used to indicate whether one or more first spatial filter management events occur with respect to the terminal device.

It is to be appreciated that different values of the first indication information are used to indicate that one or more first spatial filter management events have occurred, or that no first spatial filter management events have occurred.

In the embodiment of the disclosure, if the first prediction information includes the second indication information, the first prediction information may or may not include the first indication information.

In some embodiments, the one or more first spatial filter management events are preset spatial filter management events. In this case, the first indication information is used to indicate whether the preset spatial filter management event occurs.

If a first spatial filter management event occurs, the second indication information is used to indicate which first spatial filter management event occurs. It is to be understood that if a plurality of first spatial filter management events occur, the first prediction information includes a plurality of pieces of second indication information, and different second indication information indicates event types of different first spatial filter management events.

If the spatial filters corresponding to the occurred first spatial filter management event include a serving spatial filter, the first prediction information may include first information of the serving spatial filter corresponding to the occurred first spatial filter management event.

If the spatial filters corresponding to the occurred first spatial filter management event include a candidate spatial filter, the first prediction information may include first information of the candidate spatial filter corresponding to the occurred first spatial filter management event.

In some embodiments, the one or more first spatial filter management events include one or more of:
event A, i.e., one or more second spatial filters corresponding to the one or more first spatial filter management events include a serving spatial filter, and performance of the serving spatial filter is better than a first threshold;
event B, i.e., the one or more second spatial filters include the serving spatial filter, and the performance of the serving spatial filter is weaker than a second threshold;
event C, i.e., the one or more second spatial filters include a candidate spatial filter of a serving cell and the serving spatial filter, and performance of the candidate spatial filter of the serving cell is better than first spatial filter performance, the first spatial filter performance being the performance of the serving spatial filter plus a first offset amount;
event D, i.e., the one or more second spatial filters include a candidate spatial filter of a candidate cell and the serving spatial filter, and performance of the candidate spatial filter of the candidate cell is better than second spatial filter performance, the second spatial filter performance being the performance of the serving spatial filter plus a second offset amount;
event E, i.e., the one or more second spatial filters include the candidate spatial filter of the serving cell, and the performance of the candidate spatial filter of the serving cell is better than a third threshold;
event F, i.e., the one or more second spatial filters include the candidate spatial filter of the candidate cell, and the performance of the candidate spatial filter of the candidate cell is better than a fourth threshold;
event G, i.e., the one or more second spatial filters include the serving spatial filter and the candidate spatial filter of the serving cell, the performance of the serving spatial filter is weaker than a fifth threshold, and the performance of the candidate spatial filter of the serving cell is better than a sixth threshold;
event H, i.e., the one or more second spatial filters include the serving spatial filter and the candidate spatial filter of the candidate cell, the performance of the serving spatial filter is weaker than a seventh threshold, and the performance of the candidate spatial filter of the candidate cell is better than an eighth threshold;
event I, i.e., the one or more second spatial filters include the serving spatial filter, and a performance fluctuation of the serving spatial filter exceeds a first range;
event J, i.e., the one or more second spatial filters include the candidate spatial filter of the serving cell, and an interference of the candidate spatial filter of the serving cell is stronger than a first interference threshold; and
event K, i.e., the one or more second spatial filters include the candidate spatial filter of the candidate cell, and an interference of the candidate spatial filter of the candidate cell is stronger than a second interference threshold.

Among the plurality of thresholds involved in the event A to the event J, different thresholds may have a same value or different values.

In the embodiment of the disclosure, the performance of the spatial filter may be represented by one or more parameters characterizing the link quality of the cell, including L1-RSRP, L1-RSRQ, L1-RSSI, L1-SINR, and SNR of the spatial filter.

It is to be understood that if there are the first measurement result and the first prediction result of the second spatial filter, the terminal device may determine whether the first spatial filter management event occurs with respect to the second spatial filter, according to the first measurement result and/or the first prediction result of the second spatial filter. Optionally, the terminal device determines whether the first spatial filter management event occurs with respect to the second spatial filter, according to the first measurement result of the second spatial filter. Optionally, the terminal device determines whether the first spatial filter management event occurs with respect to the second spatial filter, according to the first prediction result of the second spatial filter. Optionally, the terminal device determines whether the first spatial filter management event occurs with respect to the second spatial filter, according to a result having better link performance among the first measurement result and the first prediction result of the second spatial filter.

In some embodiments, the performance fluctuation includes one or more of:
a first fluctuation parameter, i.e., a number of times that a link quality fluctuates at a ninth threshold within a first time length;
a second fluctuation parameter, i.e., a duration for which the link quality is less than a tenth threshold within a second time length; and
a third fluctuation parameter, i.e., a ratio of a duration for which the link quality is less than an eleventh threshold within a third time length to a total time length.

For the first fluctuation parameter, the first time length is a specific time length determined through a first time window. The first fluctuation parameter is the number of times that the link quality fluctuates at the ninth threshold within the first time window.

The number of times that the link quality fluctuates at the ninth threshold may include: a number of times that the link quality goes from a value greater than the ninth threshold to a value less than the ninth threshold, and/or a number of times that the link quality goes from the value less than the ninth threshold to the value greater than the ninth threshold.

For the second fluctuation parameter, the second time length is a specific time length determined through a second time window. The second fluctuation parameter is a duration for which the link quality is less than the tenth threshold within the specific time length.

It is to be appreciated that a duration for which the link quality is less than the tenth threshold may be a time length of one time period or a sum of time lengths of multiple time periods, where the link quality is less than the tenth threshold within the time period(s).

For the third fluctuation parameter, the third time length is a specific time length determined through a third time window. The third fluctuation parameter is a ratio of a duration for which the link quality is less than the specific threshold (i.e., the tenth threshold) within the specific time length to the total time length.

In some embodiments, the first information includes one or more of:
a cell index;
a spatial filter index; and
a spatial filter link quality.

In the embodiment of the disclosure, when the spatial filter to which the first information belongs is the spatial filter of the serving cell, the cell index of the serving cell may not be included in the first information.

In an example, the first prediction information determined by the terminal device based on the one or more first measurement results includes one or more of:
an event type of event G;
an index of a candidate beam;
link quality of the candidate beam;
an index of a serving beam; and
link quality of the serving beam.

Herein, if the candidate beam comes from a non-serving cell, that is, a candidate cell, the first prediction information further includes an index of the candidate cell, for example, information such as PCI different from the serving cell.

In some embodiments, a transmission manner of the first measurement results includes at least one of:
reporting based on a plurality of reporting instances, the first measurement results being divided into the plurality of reporting instances.

Here, when a plurality of first measurement results need to be reported, the terminal device divides the plurality of first measurement results into a plurality of reporting instances, and reports the plurality of first measurement results in batches based on the plurality of reporting instances. After receiving the plurality of reporting instances, the network device integrates the first measurement results in the plurality of reporting instances to obtain the plurality of first measurement results reported by the terminal device. Optionally, the number of reporting instances included in the plurality of reporting instances is a third number, and the third number is smaller than the first number.

Optionally, when measurement resources of the first number of spatial filters are divided into a plurality of subsets, only first measurement result(s) corresponding to the measurement resources included in one subset is/are reported in a single reporting instance.

In an example, the measurement resources of the first number of spatial filters are divided into 4 subsets, namely Set B₁, Set B₂, Set B₃ and Set B₄. In one reporting instance, contents of only one subset are reported.

In the embodiment of the disclosure, the division of the subsets may be configured by the network device, or predefined.

In an example, the division of respective subsets is configured by the network device, and after the UE reports different subsets, the network device can splice the reported contents of a plurality of subsets.

In the embodiment of the disclosure, the plurality of first measurement results are divided into a plurality of reporting instances, and the overhead of the terminal device in one measurement and reporting instance can be reduced.

In some embodiments, based on FIG. 12, the embodiment of the disclosure provides a wireless communication method, applied to a terminal device. As shown in FIG. 14, the method includes the following operation.

In an operation S1401, the terminal device receives fifth information sent by the network device, wherein the fifth information is used to indicate a target spatial filter, and is related to the first prediction information.

In some embodiments, based on FIG. 13, the embodiment of the disclosure provides a wireless communication method, applied to a terminal device. As shown in FIG. 15, the method includes the following operation.

In an operation S1501, the network device receives fifth information sent by the terminal device, wherein the fifth information is used to indicate a target spatial filter, and is related to the first prediction information.

The network device determines, based on the first prediction result, that the first spatial filter management event occurs with respect to the terminal device, determines fifth information based on the occurred first spatial filter management event or not based on the occurred first spatial filter management event, and sends the fifth information to the terminal device. Herein, the fifth information is used to indicate the target spatial filter.

Optionally, the third information is a TCI state, and the network device indicates one new TCI state or a set of new TCI states to the terminal device through a beam indication mechanism. Herein, one TCI state corresponds to one joint (uplink and downlink) TCI state, that is, a group of TCI states corresponds to one uplink TCI state and one downlink TCI state. The spatial filter included in the TCI state indicated by the network device is the target spatial filter.

In the embodiment of the disclosure, the target spatial filter indicated by the fifth information may or may not belong to the first spatial filter. It is to be understood that if the target spatial filter belongs to the first spatial filter, the terminal device has measured the target spatial filter; if the target spatial filter does not belong to the first spatial filter, the terminal device has not measured the target spatial filter.

In some embodiments, if the target spatial filter does not belong to the first spatial filter, the fifth information is further used to indicate a first measurement resource that is used for measurement of the target spatial filter and/or reporting of measurement results.

In a case where the target spatial filter indicated by the fifth information is a spatial filter that has not been measured by the terminal device before, the fifth information may additionally indicate a set of measurement resources, that is, the first measurement resources, and the terminal device may perform measurement and/or reporting of the target spatial filter through the first measurement resources. Herein, the first measurement resource may include a CSI-RS resource and/or an SSB resource.

In an example, the terminal device may implement downlink synchronization by measurement of the SSB resource included in the first measurement resource, adjust a reception spatial filter for downlink, or the like.

In an example, the terminal device may track the time and frequency by measuring the CSI-RS of the target spatial filter, or may acquire the CSI information of the spatial filter in advance and feed it back to the network device.

Optionally, the terminal device may calculate the path loss compensation in the uplink power control by measuring the downlink reference signal as the path loss reference signal.

In the embodiment of the disclosure, the terminal device may determine how to receive a new beam associated with the TCI state indicated by the network device by measuring the first measurement resource, so that the terminal device adapts to the updated serving beam (which was previously a candidate beam), i.e., the target beam, at the fastest speed.

In some embodiments, based on FIG. 12 or 14, the embodiment of the disclosure provides a wireless communication method. As shown in FIG. 16, the method includes the following operation.

In an operation S1601, the terminal device receives third configuration information sent by the network device, wherein the third configuration information is used to configure a first set including second measurement resources corresponding to the one or more first spatial filters.

In some embodiments, based on FIG. 13 15, the embodiment of the disclosure provides a wireless communication method. As shown in FIG. 17, the method includes the following operation.

In an operation S1701, the network device sends third configuration information to the terminal device, wherein the third configuration information is used to configure a first set including second measurement resources corresponding to the one or more first spatial filters.

The first set may be denoted as a measurement set Set B including a first number of measurement resources of the first spatial filter, i.e. the second measurement resources.

In some embodiments, the third configuration information is further used to configure:
a third uplink resource used to report the one or more first measurement results.

The third uplink resource is a resource for reporting the first measurement result by the terminal device. The terminal device reports the first measurement result based on the third uplink resource.

If the plurality of first measurement results are divided into a plurality of reporting instances for reporting, the third configuration information is used to configure the plurality of third uplink resources, wherein one third uplink resource corresponds to one reporting instance.

In some embodiments, based on FIG. 12 or 14 or 16, the embodiment of the disclosure provides a wireless communication method. As shown in FIG. 18, the method includes the following operation.

In an operation S1801, the terminal device sends sixth information to a network device, wherein the sixth information is used to indicate one or more of following capabilities of the terminal device:
whether the terminal device supports obtaining the one or more first measurement results through measurement;
a first number, which is a number of second measurement resources supported by the terminal device on one carrier, the second measurement resources corresponding to the first spatial filter;
a third number, which is a number of the second measurement resources supported by the terminal device on all carriers.

In some embodiments, based on FIG. 13 or 15 or 17, the embodiment of the disclosure provides a wireless communication method. As shown in FIG. 18, the method includes the following operation.

In an operation S1801, the network device receives sixth information sent by the terminal device, wherein the sixth information is used to indicate one or more of following capabilities of the terminal device:
whether the terminal device supports obtaining the one or more first measurement results through measurement;
a first number, which is a number of second measurement resources supported by the terminal device on one carrier, the second measurement resources corresponding to the first spatial filter;
a third number, which is a number of the second measurement resources supported by the terminal device on all carriers.

In the embodiment of the disclosure, the terminal device reports, based on the sixth information, the capability of measurements supported by the terminal device to the network device.

Optionally, the sixth information includes sixth indication information for indicating whether the terminal device supports obtaining the one or more first measurement results through measurement. If the sixth indication information indicates that the terminal device supports obtaining the one or more first measurement results through measurement, the sixth information is used to indicate other contents, or the sixth information does not include the sixth indication information. If other contents are indicated, it is assumed by default that the terminal device supports obtaining the one or more first measurement results through measurement.

In the embodiment of the disclosure, after receiving the sixth information, the network device may perform configuration of the first set based on the sixth information.

Hereinafter, the wireless communication method provided by the embodiments of the disclosure will be further described.

In the embodiment of the disclosure, a spatial filter management event, that is, a beam management event, is defined as follows:
event 1, performance of a serving beam of a serving cell is better than a specific threshold;
event 2, the performance of the serving beam of the serving cell is weaker than a specific threshold;
event 3, performance of a candidate beam of the serving cell is better than performance of a current serving beam plus an offset amount;
event 4, performance of a candidate beam of a non-serving cell is better than the performance of the current serving beam plus the offset amount;
event 5, the performance of the candidate beam of the serving cell is better than a specific threshold;
event 6, the performance of the candidate beam of the non-serving cell is better than a specific threshold;
event 7, the performance of the serving beam of the serving cell is weaker than a specific threshold, and the performance of the candidate beam of the serving cell is better than a specific threshold;
event 8, the performance of the serving beam of the serving cell is weaker than a specific threshold, and the performance of the candidate beam of the non-serving cell is better than a specific threshold;
event 9, a performance fluctuation of the serving beam of the serving cell exceeds a certain range;
event 10, an interference of the candidate beam of the serving cell on the UE is stronger than a certain threshold;
event 11, an interference of the candidate beam of the non-serving cell on the UE is stronger than a certain threshold.

Herein, the events 1 to 11 correspond to the events A to K, respectively.

The performance of the serving beam or candidate beam can be measured using metrics of the physical layer, such as L1-RSRP, L1-RSRQ, L1-RSSI, L1-SINR, SNR, and BLER of the PDCCH. These metrics can also serve as link quality for inputs and outputs to models.

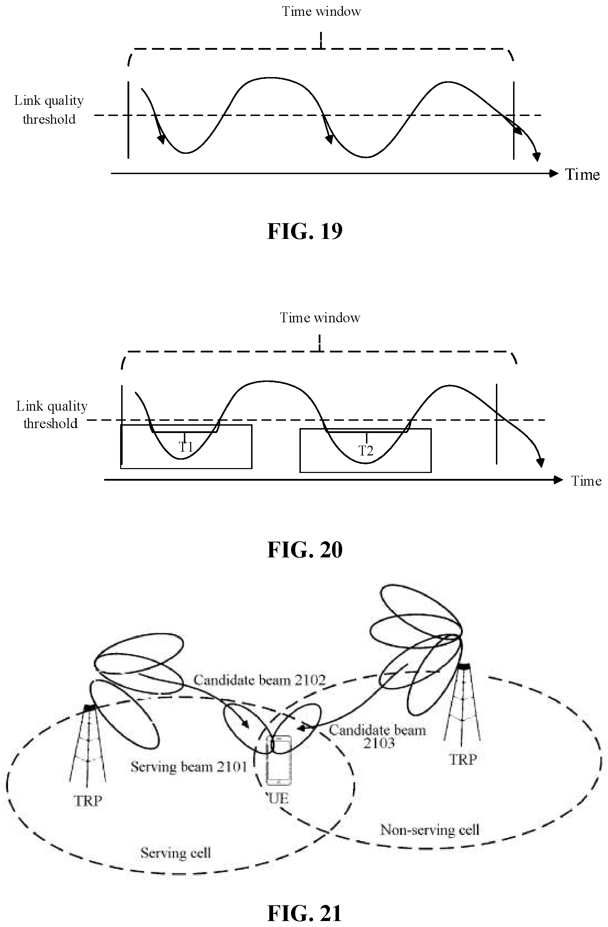

For the fluctuation of the beam link quality in beam management events, reference may be made to FIG. 19. The fluctuation is a number of times that the link quality crosses some predefined threshold from above to below within a time length (e.g., a time window). In other embodiments, a measure of the fluctuation of the link performance may be a duration for which the link quality is below a particular threshold (the sum of the time lengths T1 and T2) within a particular time length (e.g., a time window), or a ratio of the duration for which link quality is below the particular threshold to the total time length, as shown in FIG. 20.

For the BLER of the PDCCH, the UE may convert the measured L1-SINR into the BLER of the control channel according to the conditions defined in the standard. In general, when the BLER of the PDCCH is higher than 1%, it is considered that the link quality is poor and needs to be adjusted.

FIG. 21 illustrates a serving beam 2101 and a candidate beam 2102 within a serving cell, and a candidate beam 2103 within a non-serving cell. It is to be noted that the NR supports an inter-cell beam management mechanism, that is, a beam of a non-serving cell may be converted to a serving beam.

The wireless communication methods provided by the embodiments of the disclosure include, but are not limited to, the following embodiments.

First embodiment: beam event prediction with a model deployed on the UE side

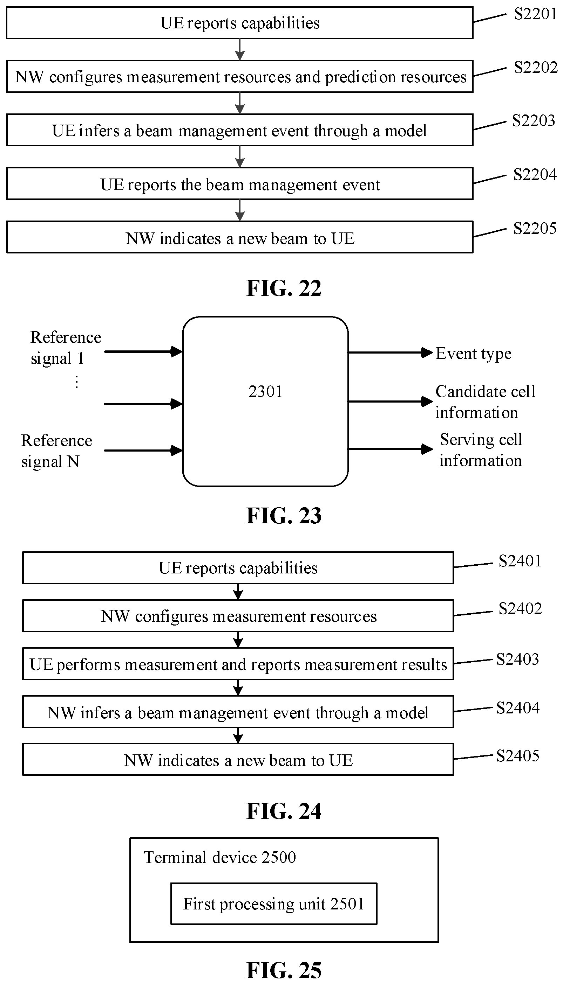

As shown in FIG. 22, the wireless communication method provided by the embodiment of the disclosure includes the following operations.

In an operation S2201, the UE reports capabilities.

The UE reports measurement and prediction capabilities of the beam management events it supports. Specifically, first the UE informs the NW whether it supports beam event-related measurement(s) and/or prediction(s).

In a case where the UE's capability support the above, the UE needs to also report other capability details related to measurement and/or prediction. The purpose of this capability reporting is to facilitate subsequent configuration by the NW.

Such measurement and prediction capabilities include, but are not limited to:
capability 1, i.e., prediction of which beam management events is supported by the model on the UE side; and
capability 2, i.e., a maximum number (that is, the first number) of measurement resources that the UE supports measuring on one Component Carrier (CC).
   ∘ In some embodiments, the downlink measurement resource is a downlink reference signal resource, i.e., a CSI-RS resource and/or an SSB resource.
capability 3, i.e., a maximum number (that is, the second number) of prediction resources that the UE supports predicting on one CC.
   ∘ In some embodiments, the prediction resource is also a downlink reference signal resource, such as a CSI-RS resource and/or an SSB resource. In general, one downlink reference signal resource corresponds to one candidate beam.

Considering the measurement overhead of the UE, for the UE capability, it is needed to consider not only the situation on one carrier, but also the capability of the UE on all configured and/or active carriers.

Capability 4, i.e., a maximum number (that is, the third number) of measurement resources that the UE supports measuring on all CCs.

Capability 5, i.e., a maximum number (that is, the fourth number) of prediction resources that the UE supports predicting on all CCs.

In an operation S2202, the NW configures measurement resources and prediction resources.

Configuration signaling used by the NW is generally RRC signaling. In other embodiments, the configuration signaling may be high-layer signaling from the core network.

According to the capability report of the UE, the NW configures prediction resources of the UE that are related to beam management event(s). The configuration includes, but is not limited to the following configurations.

Configuration 1, i.e., a type of beam management event (i.e., the fourth beam management event) that the UE can predict, for example, the UE can predict event 1, event 3, and event 5, and the beam management that cannot be predicted is event 2 and event 4.

Configuration 2, i.e., a measurement set Set B for measurement by the UE for the beam management event. The set includes one or more downlink reference signal resources. In some embodiments, the resource is a CSI-RS resource and/or an SSB resource.

Configuration 3, i.e., a prediction set Set A for prediction by the UE for the beam management event. The set includes a reference signal resource corresponding to a candidate beam.

In addition, the NW optionally configures, for the UE, some configuration information 4: uplink resources (i.e., PUSCH or PUCCH). When there is a beam management event that needs to be reported, the uplink resource is used to carry the report of the event predicted by the model. The PUCCH here is used to directly carry the reporting of the beam management event.

In some embodiments, the NW configures a PUCCH resource for the UE to request a uplink resource. The PUCCH resource is used to carry an uplink resource Scheduling Request (SR), and then the PUSCH is used to carry the reporting of the beam management event.

In an operation S2203, the UE infers a beam management event through the model.

In the embodiment of the disclosure, the prediction of beam management events in the spatial domain is considered. In some embodiments, the Set B may be a subset of the Set A. For example, the Set A includes all of the beams (pairs) of a cell. In some embodiments, for a downlink transmitting beam, it is assumed that the Set A has downlink reference signal resources corresponding to 64 transmitting beams, but in order to reduce the overhead and delay of measurement, the Set B has only downlink reference signal resources corresponding to 8 transmitting beams. In some other embodiments, for a downlink transmitting/receiving beam pair, it is assumed that the Set A has 256 downlink reference signal resources corresponding to transmitting/receiving beam pairs, but in order to reduce the overhead and delay of measurement, the Set B has only 32 downlink reference signal resources corresponding to the transmitting/receiving beam pairs.

In other embodiments, the Set B and the Set A may also be different. For example, the Set B includes SSB-based wide beams (which are of a smaller number, such as 8 downlink transmitting beams), while the Set A includes CSI-RS-based narrow beams (which are of a larger number, such as 64 downlink transmitting beams).

When the UE completes the measurement, that is, the measurement results of the measurement set Set B can be used as inputs of the model. The model uses these inputs to make inferences or predictions. The reference signal resource corresponding to the beam of the inference result should be selected from the prediction set Set A.

The prediction result, that is, the first prediction information, includes one or more of the following:
- whether a beam management event defined in the embodiment of the disclosure and configured by the NW occurs;
- if a beam management event occurs, which beam management event occurs (i.e. the type of event) and related information of the beam management event, wherein the information of the beam management event includes one or more of the following:
   ∘ information of a serving beam corresponding to the beam management event (if any)
      ▪ link quality of the serving beam
   ∘ Information of a candidate beam corresponding to the beam management event (if any)
      ▪ link quality of the candidate beam;
      ▪ a TA corresponding to the candidate beam. Note: Only applicable to uplink channel and signal transmission
      ▪ one or more of the following power control parameters corresponding to the candidate beam:
- Path Loss Reference Signal (PL RS);
- P0, i.e., the target received power per PRB;
- Alpha, that is, the compensation factor for path loss;
- CLI, i.e. a closed-loop power control indication;
- Note: Only applicable to uplink channel and signal transmission

The input and output relationship of the model is as shown in Fig. 23, and the Set B serves as the input of the model. The candidate beams (pairs) output by the model are selected from the Set A. In some embodiments, the model may also output a predicted link quality. In some other embodiments, the model may also output TAs corresponding to candidate beams (applicable only to uplink transmissions) and uplink power control related parameters.

In an example, for beam management event prediction, the model outputs one or more of the following information:
- Event Type 7
- candidate beam index (represented by a resource index of a downlink reference signal)
   o If the candidate beam is from a non-serving Cell, an index corresponding to the Cell, should also be reported, for example, information such as a Physical Cell Identifier (PCI) different from the serving Cell.
- link quality of the candidate beam
- serving beam index (represented by a resource index of a downlink reference signal)
   link quality of the serving beam

In an operation S2204, the UE reports the beam management event.

For the prediction result of the model, in some embodiments, the UE may determine at its own discretion whether to report the prediction result of the beam management event. For example, when the model predicts that the current serving beam is better than a specific threshold (event 1) and still maintains an appropriate link state of serving beam, then the UE does not need to report or trigger a subsequent beam management operation.

In still other embodiments, the UE reports, according to the configuration of the NW, the prediction result of the beam management event. For example, when the model outputs an optimal candidate beam (different from the current serving beam) and the performance is better than that of the current serving beam plus an offset amount (e.g., 6 dB), the UE may determine that the beam management event 3 occurs and report it. This offset amount is typically configured in advance by the NW or predefined in the protocol.

A reporting signaling flow for beam management events is as follows. In some embodiments, the UE sends a scheduling request (SI) to request uplink resources. After receiving the SR, if the NW agrees to the scheduling request of the UE, the NW sends the uplink scheduling DCI to the UE. The UE transmits the PUSCH according to the uplink resource indicated by the DCI. The PUSCH carries reporting information of the beam management event.

Because the prediction of beam management events by the model itself is forward-looking, when the model is deployed on the UE side, the UE can send the SR to the NW in advance. When the event does not occur, the uplink resource is requested to carry the report of the predicted beam management event. The technical advantage thereof is that requesting a reporting resource in advance enables the the prediction result to be reported to the NW earlier, and the NW can take action in advance, so as to avoid the occurrence of beam failure to a large extent.

The reporting contents of beam management events include, but not limited to, the following information:
- a type of a beam management event, wherein a beam management event type index is used to indicate a type of the beam management event;
- a candidate beam index (if any) corresponding to the beam management event, wherein a candidate CSI-RI resource indicator (CRI) or an SSB resource indicator (SSBRI) is used to indicate a resource index of the CSI-RI or SSB corresponding to the candidate beam to be reported;
- a serving beam index (if any) corresponding to the beam management event, that is, the serving beam index (i.e., candidate CRI or SSBRI) is used to indicate a resource index of the CSI-RI or SSB corresponding to the serving beam to be reported;
- link quality of a candidate beam corresponding to the beam management event (if any);
- Link quality of a serving beam corresponding to the beam management event (if any);
- a TA of the candidate beam corresponding to the beam management event (if any, only applicable to uplink transmission);
- a power control parameter of the candidate beams corresponding to the beam management event (if any, only applicable to uplink transmission);

Uplink signaling carrying the beam management event may be reported using UCI of the physical layer. The UE may also use the MAC CE to carry the reporting of the beam management event.

As shown in Table 1, the UE reports information, such as the type of beam management event, including indexes and link quality of K (K> =1) subsequent beams, and indexes and link quality of N (N> =1) serving beams. In some embodiments, the UCI may be carried on the PUCCH of the physical layer, similar to the beam reporting mechanism in the prior art. The MAC CE may be carried on the PUSCH of the physical layer, similar to the TRP-specific Beam Failure Recovery (BFR) in the prior art.

**Table 1. Reporting of Beam Management Event**

| CSI report number | | CSI fields |
|---|---|---|
| CSI Report #n | | Beam management event type index |
| | | Candidate CRI or SSBRI #1 (if reported) |
| | | ... |
| | | Candidate CRI or SSBRI #K, if reported |
| | | RSRP #1, if reported |
| | | ... |
| | | Differential RSRP #K, if reported |
| | | Serving CRI or SSBRI #1, if reported |
| | | ... |
| | | Serving CRI or SSBRI #N, if reported |
| | | RSRP #1, if reported |
| | | ... |
| | | Differential RSRP #N, if reported |

In some other embodiments, assuming that the same or similar beam management prediction model is deployed on the NW side, and the function of the model is to at least predict in advance whether or not a beam management event occurs, then the NW may transmit and allocate an uplink resource to the UE in advance before the UE requests the uplink resource. For example, the NW sends DCI with UL grant to the UE. The technical advantage is that the process for the uplink resource request transmitted by the UE can be avoided, thereby shortening the time of beam updating.

In an operation S2205, the NW indicates a new beam to the UE.

From the candidate beams reported by the UE, the NW indicates one new TCI state or a set of new TCI states to the UE through a beam indication mechanism. It is to be noted that one TCI state corresponds to one joint (uplink and downlink) TCI state. A set of TCI states corresponds to one uplink TCI state and one downlink TCI state.

When the TCI state (candidate beam predicted based on the model) indicated by the NW contains a downlink reference signal that the UE has not previously measured, the NW should indicate a set of downlink reference signal measurement resources while indicating the TCI state. The downlink reference signal resources is a set of CSI-RS resources and/or SSB resources. The indication information may be carried in DCI or MAC CE signaling.

For example, the UE may implement synchronization of the downlink by measuring SSB resources, or perform a receive beam sweep to adjust a receive spatial filter (beam) of the downlink. The UE may perform time and frequency tracking by measuring CSI-RS (Tracking RS) of the candidate beam. The UE may obtain the CSI information of the cell by measuring the CSI-RS of a plurality of ports and feed back the information to the NW. The UE may calculate path loss compensation in uplink power control by measuring the downlink reference signal as the path loss reference signal.

The UE may determine, by measuring the resources, how to receive the new beam associated with the TCI state. The technical advantage is that the UE adapts to the updated serving beam (which was previously a candidate beam), i.e., the target beam, at the fastest speed.

Second embodiment: beam event prediction with a model deployed on the NW side
If the model is deployed on the NW side, the wireless communication method provided by the embodiment of the disclosure, as shown in FIG. 24, includes the following operations.

In an operation S2401, the UE reports capabilities.

The UE reports the measurement capability of the beam management events it supports. Specifically, first the UE informs the NW whether it supports beam event-related measurement(s) and/or reporting.

In a case where the UE's capability supports the above, the UE needs to report other capability details related to measurement. The purpose of this capability reporting is to facilitate subsequent configuration by the NW.

Such measurement capabilities include, but are not limited to:
Capability 2, i.e., a maximum number of measurement resources that the UE supports measuring on one CC.
∘ In some embodiments, the downlink measurement resource is a downlink reference signal resource, i.e., a CSI-RS resource and/or an SSB

Considering the measurement overhead of the UE, for the UE capability, it is needed to consider not only the situation on one carrier, but also the capability of the UE on all configured and/or active carriers.

Capability 4, i.e., a maximum number of measurement resources that the UE supports measuring on all carriers.

In an operation S2402, the NW configures measurement resources.

According to the capability report of the UE, the NW configures measurement resources of the UE that are related to beam management event(s). It is to be noted that since the model is deployed on the NW side, it is not necessary to configure the information of beam management event to the UE.

The configuration includes, but is not limited to the following configurations.

Configuration information 2, i.e., a measurement set Set B for measurement by the UE for the beam management event. The set includes one or more downlink reference signal resources. In some embodiments, the resource is a CSI-RS resource and/or an SSB resource.

The NW configures some configuration information 4 for the UE, i.e., the uplink resource carrying the measurement report. Examples are given as follows.

For periodic measurement, the NW may configure associated PUCCH resources for periodic reporting; may also configure and activate a semi-persistent PUCCH or PUSCH for semi-persistent reporting; and may also trigger aperiodic reporting on PUSCH.

For semi-persistent measurement, the NW may configure and activate semi-persistent PUCCH or PUSCH for semi-persistent reporting; and may also trigger aperiodic reporting on PUSCH.

For aperiodic measurement, the NW may trigger periodic reporting on PUSCH.

In an operation S2403, the UE performs measurement and reports measurement results.

When the model is deployed on the NW side, the UE only needs to measure the Set B and report the measurement results to the NW.

The contents reported by the UE includes one or more of the following:
content A, i.e., index(es) of reference signal resource(s) in the Set B; and
content B, link performance of the reference signal resource(s) in the Set B, such as L1-RSRP.

When there are too many resources configured in the Set B, the UE may perform measurement and reporting in batches. For example, assuming that the Set B contains four subsets, namely, Set B1, Set B2, Set B3, and Set B4, the UE reports the contents of only one subset in one reporting instance. Since the division of subsets in the Set B is configured by NW, when the UE reports different subsets, the NW can splice the reported contents of multiple subsets into a complete Set B. The technical advantage is to reduce the overhead of the UE in one measurement and reporting instance. When the UE measures multiple subsets of the Set B and and reports accordingly, the NW can obtain a complete Set B through splicing.

In an operation S2404, the NW infers a beam management event through the model.

For the input and output relationship of the model, reference is made to FIG. 12; and when the NW receives the complete Set B, it takes it as an input to the model to predict or infer the beam management event. For the output contents of the model, reference can be made to S1103.

For example, for beam management event prediction, the model outputs one or more of the following information:
- Event Type 3
- candidate beam index #1 (represented by a resource index of a downlink reference signal)
- link quality #1 of a candidate beam
- candidate beam index #2 (represented by a resource index of a downlink reference signal)
- link quality #2 of a candidate beam

In an operation S2405, the NW indicates a new beam to the UE.

From the inference results of the model, assuming that it is predicted that a beam management event is about to occur. The NW may indicate one new TCI state or a set of new TCI states to the UE through an existing beam indication mechanism.

When the TCI state indicated by the NW includes a downlink reference signal that the UE has not previously measured, the NW should indicate a set of measurement resources while indicating the TCI state. The downlink reference signal resources is a set of CSI-RS resources and/or SSB resources. The indication information may be carried in DCI or MAC CE signaling.

For example, the UE may implement downlink synchronization by measuring SSB resources of candidate beams, adjust downlink reception spatail filters (beams), and the like. The UE may perform time and frequency tracking by measuring the CSI-RS (Tracking RS) of the candidate beam, or may acquire the CSI information of the cell in advance and feed the information back to the NW.

The UE may determine, by measuring the resources, how to receive the new beam associated with the TCI state. The technical advantage is that the UE adapts to the updated serving beam (which was previously a candidate beam), i.e., the target beam, at the fastest speed.

The preferred embodiments of the disclosure have been described in detail above with reference to the accompanying drawings, but the disclosure is not limited to the specific details in the above-described embodiments. Within the scope of the technical concept of the disclosure, various simple modifications can be made to the technical solutions of the disclosure, and these simple modifications all fall within the scope of protection of the disclosure. For example, various specific technical features described in the above-described detailed description can be combined in any suitable manner without contradiction, and various possible combinations will not be described separately in the disclosure in order to avoid unnecessary repetition. For example, various embodiments of the disclosure may be combined arbitrarily, and as long as they do not violate the idea of the disclosure, they should also be regarded as the disclosure of the disclosure. For another example, on the premise that there is no conflict, each embodiment described in the disclosure and/or the technical features in each embodiment can be arbitrarily combined with the prior art, and the technical solution obtained after the combination should also fall within the scope of protection of the disclosure.

It should be further understood that in various method embodiments of the present disclosure, sizes of serial numbers of the above processes do not mean a sequence of execution, and the sequence of execution of each process should be determined by its function and internal logic, and should not constitute any limitation on implementation processes of the embodiments of the disclosure. In addition, in the embodiments of the disclosure, the terms "downlink", "uplink" and "sidelink" are used to indicate the transmission direction of signals or data. Herein, "downlink" is used to indicate that the transmission direction of signals or data is a first direction transmitted from a station to a UE of the cell, "uplink" is used to indicate that the transmission direction of signals or data is a second direction transmitted from the UE of the cell to the station, and "sidelink" is used to indicate that the transmission direction of signals or data is a third direction transmitted from UE 1 to UE 2. For example, "downlink signal" indicates that the transmission direction of the signal is the first direction. In addition, in the embodiments of the disclosure, the term "and/or" is merely an association relationship describing associated objects, indicating that there may be three kinds of relationships. Specifically, A and/or B may represent three cases in which A is present alone, A and B are present at the same time, and B is present alone. In addition, the character "/" in the present disclosure generally indicates that the relationship between the related objects is "or".

FIG. 25 is a schematic structural diagram of a terminal device according to an embodiment of the disclosure. As shown in FIG. 25, the terminal device 2500 includes a first processing unit 2501.

The first processing unit 2501 is configured to predict first prediction information based on one or more first measurement results, wherein the first measurement result is a measurement result obtained by measuring a first spatial filter, and the first prediction information is related to one or more first prediction results, the first prediction result being a measurement result of a second spatial filter predicted based on the one or more first measurement results.

In some embodiments, the first prediction information includes one or more of:
first indication information for indicating whether one or more first spatial filter management events have occurred, the first spatial filter management event being related to the first prediction result;
second indication information for indicating an event type of the first spatial filter management event that has occurred;
first information of a serving spatial filter corresponding to the first spatial filter management event; and
first information of a candidate spatial filter corresponding to the first spatial filter management event;
a Timing Advance (TA) of the candidate spatial filter corresponding to the first spatial filter management event; and
a power control parameter of the candidate spatial filter corresponding to the first spatial filter management event.

In some embodiments, the one or more first spatial filter management events are spatial filter management events configured or defined by a network device.

In some embodiments, the one or more first spatial filter management events include one or more of:
one or more second spatial filters corresponding to the one or more first spatial filter management events include a serving spatial filter, and performance of the serving spatial filter is better than a first threshold;
the one or more second spatial filters include the serving spatial filter, and the performance of the serving spatial filter is weaker than a second threshold;
the one or more second spatial filters include a candidate spatial filter of a serving cell and the serving spatial filter, and performance of the candidate spatial filter of the serving cell is better than first spatial filter performance, the first spatial filter performance being the performance of the serving spatial filter plus a first offset amount;
the one or more second spatial filters include a candidate spatial filter of a candidate cell and the serving spatial filter, and performance of the candidate spatial filter of the candidate cell is better than second spatial filter performance, the second spatial filter performance being the performance of the serving spatial filter plus a second offset amount;
the one or more second spatial filters include the candidate spatial filter of the serving cell, and the performance of the candidate spatial filter of the serving cell is better than a third threshold;
the one or more second spatial filters include the candidate spatial filter of the candidate cell, and the performance of the candidate spatial filter of the candidate cell is better than a fourth threshold;
the one or more second spatial filters include the serving spatial filter and the candidate spatial filter of the serving cell, the performance of the serving spatial filter is weaker than a fifth threshold, and the performance of the candidate spatial filter of the serving cell is better than a sixth threshold;
the one or more second spatial filters include the serving spatial filter and the candidate spatial filter of the candidate cell, the performance of the serving spatial filter is weaker than a seventh threshold, and the performance of the candidate spatial filter of the candidate cell is better than an eighth threshold;
the one or more second spatial filters include the serving spatial filter, and a performance fluctuation of the serving spatial filter exceeds a first range;
the one or more second spatial filters include the candidate spatial filter of the serving cell, and an interference of the candidate spatial filter of the serving cell is stronger than a first interference threshold; and
the one or more second spatial filters include the candidate spatial filter of the candidate cell, and an interference of the candidate spatial filter of the candidate cell is stronger than a second interference threshold.

In some embodiments, the performance fluctuation includes one or more of:
a number of times that a link quality fluctuates at a ninth threshold within a first time length;
a duration for which the link quality is less than a tenth threshold within a second time length; and
a ratio of a duration for which the link quality is less than an eleventh threshold within a third time length to a total time length.

In some embodiments, the terminal device 2600 further includes a communication unit.

The communication unit is configured to send second information to a network device, wherein the second information is used to indicate a second spatial filter management event, and the second spatial filter management event is the first spatial filter management event that is to be reported.

In some embodiments, the second spatial filter management event is:
determined by the terminal device; or,
indicated by the network device; or,
predefined.

In some embodiments, the second information is transmitted through Uplink Control Information (UCI).

In some embodiments, for one second spatial filter management event, the second information includes one or more of:
third indication information for indicating an event type of the second spatial filter management event;
first information of a serving spatial filter corresponding to the second spatial filter management event;
first information of a candidate spatial filter corresponding to the second spatial filter management event;
a TA of the candidate spatial filter corresponding to the second spatial filter management event; and
a power control parameter of the candidate spatial filter corresponding to the second spatial filter management event.

In some embodiments, the first information includes one or more of:
a cell index;
a spatial filter index; and
a spatial filter link quality.

In some embodiments, the power control parameter includes one or more of:
Path Loss Reference Signal (PL RS);
target received power on a Physical Resource Block (PRB);
compensation factor for path loss; and
closed-loop power control indication.

In some embodiments, the terminal device 2600 further includes a communication unit.

The communication unit is configured to receive first configuration information sent by the network device, wherein the first configuration information is used to configure a first uplink resource, the first uplink resource being used to transmit the second information.

In some embodiments, the terminal device 2600 further includes a communication unit.

The communication unit is configured to send a first request to the network device, the first request being used to request the first uplink resource.

In some embodiments, the first request is sent before or after the second spatial filter management event is determined.

In some embodiments, the terminal device 2600 further includes a communication unit.

The communication unit is configured to receive third information sent by the network device, wherein the third information is used to indicate a target spatial filter, and is related to the second information.

In some embodiments, if the target spatial filter does not belong to the first spatial filter, the third information is further used to indicate a first measurement resource that is used for measurement of the target spatial filter and/or reporting of measurement results.

In some embodiments, the terminal device 2600 further includes a communication unit.

The communication unit is configured to receive second configuration information sent by the network device, wherein the second configuration information is used to configure a first set and a second set, the first set includes second measurement resources corresponding to the one or more first spatial filters, and the second set includes prediction resources corresponding to one or more third spatial filters, the second spatial filter being one of the one or more third spatial filters.

In some embodiments, no identical resource exists between the second measurement resources included in the first set and the prediction resources included in the second set.

In some embodiments, the first set is a subset of the second set.

In some embodiments, the second configuration information is further used to configure one or more of:
a third spatial filter management event, which is a spatial filter management event for which the one or more first measurement results are used for prediction; and
a first uplink resource or a second uplink resource, wherein the first uplink resource is used to report a spatial filter management event, and the second uplink resource is used to transmit a first request that is used to request the first uplink resource.

In some embodiments, the terminal device 2600 further includes a communication unit.

The communication unit is configured to send fourth information to a network device, wherein the fourth information is used to indicate one or more of following capabilities of the terminal device:
whether the terminal device supports obtaining the one or more first measurement results through measurement and/or supports predicting the first prediction information based on the one or more first measurement results;
one or more fourth spatial filter management events, which are spatial filter management event supported being predicted by the one or more first measurement results;
a first number, which is a number of second measurement resources supported by the terminal device on one carrier, the second measurement resources corresponding to the first spatial filter;
a second number, which is a number of prediction resources supported by the terminal device on one carrier, the prediction resources corresponding to the second spatial filter;
a third number, which is a number of the second measurement resources supported by the terminal device on all carriers; and
a fourth number, which is a number of the prediction resources supported by the terminal device on all carriers.

In the embodiment of the disclosure, the communication unit may be implemented by a transceiver in the terminal device, and the first processing unit may be implemented by a processor in the terminal device.

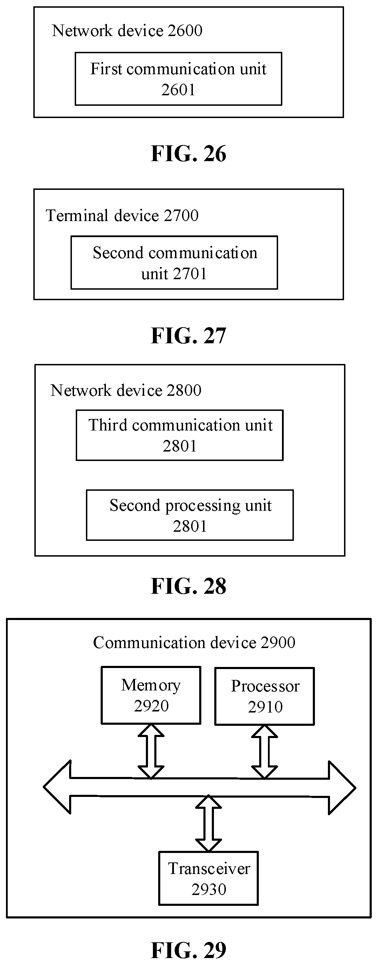

FIG. 26 is a schematic structural diagram of a network device according to an embodiment of the disclosure. As shown in FIG. 26, the network device 2600 includes a first communication unit 2601.
a first communication unit 2601 is configured to receive second information sent by a terminal device, wherein the second information is used to indicate a second spatial filter management event, which is a first spatial filter management event that is to be reported, the first spatial filter management event is related to a first prediction result, and the first prediction result is a measurement result of a second spatial filter predicted based on one or more first measurement results, the first measurement result being a measurement result obtained by measuring a first spatial filter,
wherein the one or more first measurement results are used by the terminal device to predict first prediction information related to one or more first prediction results.

In some embodiments, the first prediction information includes one or more of:
first indication information for indicating whether one or more first spatial filter management events have occurred, the first spatial filter management event being related to the first prediction result;
second indication information for indicating an event type of the first spatial filter management event that has occurred;
first information of a serving spatial filter corresponding to the first spatial filter management event; and
first information of a candidate spatial filter corresponding to the first spatial filter management event;
a Timing Advance (TA) of the candidate spatial filter corresponding to the first spatial filter management event; and
a power control parameter of the candidate spatial filter corresponding to the first spatial filter management event.

In some embodiments, the one or more first spatial filter management events are spatial filter management events configured or defined by a network device.

In some embodiments, the one or more first spatial filter management events include one or more of:
one or more second spatial filters corresponding to the one or more first spatial filter management events include a serving spatial filter, and performance of the serving spatial filter is better than a first threshold;
the one or more second spatial filters include the serving spatial filter, and the performance of the serving spatial filter is weaker than a second threshold;
the one or more second spatial filters include a candidate spatial filter of a serving cell and the serving spatial filter, and performance of the candidate spatial filter of the serving cell is better than first spatial filter performance, the first spatial filter performance being the performance of the serving spatial filter plus a first offset amount;
the one or more second spatial filters include a candidate spatial filter of a candidate cell and the serving spatial filter, and performance of the candidate spatial filter of the candidate cell is better than second spatial filter performance, the second spatial filter performance being the performance of the serving spatial filter plus a second offset amount;
the one or more second spatial filters include the candidate spatial filter of the serving cell, and the performance of the candidate spatial filter of the serving cell is better than a third threshold;
the one or more second spatial filters include the candidate spatial filter of the candidate cell, and the performance of the candidate spatial filter of the candidate cell is better than a fourth threshold;
the one or more second spatial filters include the serving spatial filter and the candidate spatial filter of the serving cell, the performance of the serving spatial filter is weaker than a fifth threshold, and the performance of the candidate spatial filter of the serving cell is better than a sixth threshold;
the one or more second spatial filters include the serving spatial filter and the candidate spatial filter of the candidate cell, the performance of the serving spatial filter is weaker than a seventh threshold, and the performance of the candidate spatial filter of the candidate cell is better than an eighth threshold;
the one or more second spatial filters include the serving spatial filter, and a performance fluctuation of the serving spatial filter exceeds a first range;
the one or more second spatial filters include the candidate spatial filter of the serving cell, and an interference of the candidate spatial filter of the serving cell is stronger than a first interference threshold; and
the one or more second spatial filters include the candidate spatial filter of the candidate cell, and an interference of the candidate spatial filter of the candidate cell is stronger than a second interference threshold.

In some embodiments, the performance fluctuation includes one or more of:
a number of times that a link quality fluctuates at a ninth threshold within a first time length;
a duration for which the link quality is less than a tenth threshold within a second time length; and
a ratio of a duration for which the link quality is less than an eleventh threshold within a third time length to a total time length.

In some embodiments, the second spatial filter management event is:
determined by the terminal device; or,
indicated by the network device; or,
predefined.

In some embodiments, the second information is transmitted through Uplink Control Information (UCI).

In some embodiments, for one second spatial filter management event, the second information includes one or more of:
third indication information for indicating an event type of the second spatial filter management event;
first information of a serving spatial filter corresponding to the second spatial filter management event;
first information of a candidate spatial filter corresponding to the second spatial filter management event;
a TA of the candidate spatial filter corresponding to the second spatial filter management event; and
a power control parameter of the candidate spatial filter corresponding to the second spatial filter management event.

In some embodiments, the first information includes one or more of:
a cell index;
a spatial filter index; and
a spatial filter link quality.

In some embodiments, the power control parameter includes one or more of:
Path Loss Reference Signal (PL RS);
target received power on a Physical Resource Block (PRB);
compensation factor for path loss; and
closed-loop power control indication.

In some embodiments, the first communication unit is further configured to send first configuration information to the terminal device, wherein the first configuration information is used to configure a first uplink resource, the first uplink resource being used to transmit the second information.

In some embodiments, the first communication unit 2610 is further configured to receive a first request sent by the terminal device, the first request being used to request the first uplink resource.

In some embodiments, the first request is sent before or after the second spatial filter management event is determined.

In some embodiments, the first communication unit 2610 is further configured to send third information to the terminal device, wherein the third information is used to indicate a target spatial filter, and is related to the second information.

In some embodiments, if the target spatial filter does not belong to the first spatial filter, the third information is further used to indicate a first measurement resource that is used for measurement of the target spatial filter and/or reporting of measurement results.

In some embodiments, the first communication unit 2610 is further configured to send second configuration information to the terminal device, wherein the second configuration information is used to configure a first set and a second set, the first set includes second measurement resources corresponding to the one or more first spatial filters, and the second set includes prediction resources corresponding to one or more third spatial filters, the second spatial filter being one of the one or more third spatial filters.

In some embodiments, no identical resource exists between the second measurement resources included in the first set and the prediction resources included in the second set.

In some embodiments, the first set is a subset of the second set.

In some embodiments, the second configuration information is further used to configure one or more of:
a third spatial filter management event, which is a spatial filter management event for which the one or more first measurement results are used for prediction; and
a first uplink resource or a second uplink resource, wherein the first uplink resource is used to report a spatial filter management event, and the second uplink resource is used to transmit a first request that is used to request the first uplink resource.

In some embodiments, the first communication unit 2610 is further configured to receive fourth information sent by the terminal device, wherein the fourth information is used to indicate one or more of following capabilities of the terminal device:
whether the terminal device supports obtaining the one or more first measurement results through measurement and/or supports predicting the first prediction information based on the one or more first measurement results;
one or more fourth spatial filter management events, which are spatial filter management event supported being predicted by the one or more first measurement results;
a first number, which is a number of second measurement resources supported by the terminal device on one carrier, the second measurement resources corresponding to the first spatial filter;
a second number, which is a number of prediction resources supported by the terminal device on one carrier, the prediction resources corresponding to the second spatial filter;
a third number, which is a number of the second measurement resources supported by the terminal device on all carriers; and
a fourth number, which is a number of the prediction resources supported by the terminal device on all carriers.

In the embodiment of the disclosure, the first communication unit may be implemented by a transceiver in the network device.

FIG. 27 is a schematic structural diagram of a terminal device according to an embodiment of the disclosure. As shown in FIG. 27, the terminal device 2700 includes a second communication unit 2701.

The second communication unit 2701 is configured to send one or more first measurement results to a network device, wherein the first measurement result is a measurement result obtained by measuring a first spatial filter,
wherein the one or more first measurement results are used by the network device to predict first prediction information, and the first prediction information is related to one or more first prediction results, the first prediction result being a measurement result of a second spatial filter predicted based on the one or more first measurement results.

In some embodiments, the first prediction information includes one or more of:
first indication information for indicating whether one or more first spatial filter management events have occurred, the first spatial filter management event being related to the first prediction result;
second indication information for indicating an event type of the first spatial filter management event;
first information of a serving spatial filter corresponding to the first spatial filter management event; and
first information of a candidate spatial filter corresponding to the first spatial filter management event.

In some embodiments, the one or more first spatial filter management events include one or more of:
one or more second spatial filters corresponding to the one or more first spatial filter management events include a serving spatial filter, and performance of the serving spatial filter is better than a first threshold;
the one or more second spatial filters include the serving spatial filter, and the performance of the serving spatial filter is weaker than a second threshold;
the one or more second spatial filters include a candidate spatial filter of a serving cell and the serving spatial filter, and performance of the candidate spatial filter of the serving cell is better than first spatial filter performance, the first spatial filter performance being the performance of the serving spatial filter plus a first offset amount;
the one or more second spatial filters include a candidate spatial filter of a candidate cell and the serving spatial filter, and performance of the candidate spatial filter of the candidate cell is better than second spatial filter performance, the second spatial filter performance being the performance of the serving spatial filter plus a second offset amount;
the one or more second spatial filters include the candidate spatial filter of the serving cell, and the performance of the candidate spatial filter of the serving cell is better than a third threshold;
the one or more second spatial filters include the candidate spatial filter of the candidate cell, and the performance of the candidate spatial filter of the candidate cell is better than a fourth threshold;
the one or more second spatial filters include the serving spatial filter and the candidate spatial filter of the serving cell, the performance of the serving spatial filter is weaker than a fifth threshold, and the performance of the candidate spatial filter of the serving cell is better than a sixth threshold;
the one or more second spatial filters include the serving spatial filter and the candidate spatial filter of the candidate cell, the performance of the serving spatial filter is weaker than a seventh threshold, and the performance of the candidate spatial filter of the candidate cell is better than an eighth threshold;
the one or more second spatial filters include the serving spatial filter, and a performance fluctuation of the serving spatial filter exceeds a first range;
the one or more second spatial filters include the candidate spatial filter of the serving cell, and an interference of the candidate spatial filter of the serving cell is stronger than a first interference threshold; and
the one or more second spatial filters include the candidate spatial filter of the candidate cell, and an interference of the candidate spatial filter of the candidate cell is stronger than a second interference threshold.

In some embodiments, the performance fluctuation includes one or more of:
a number of times that a link quality fluctuates at a ninth threshold within a first time length;
a duration for which the link quality is less than a tenth threshold within a second time length; and
a ratio of a duration for which the link quality is less than an eleventh threshold within a third time length to a total time length.

In some embodiments, the first information includes one or more of:
a cell index;
a spatial filter index; and
a spatial filter link quality.

In some embodiments, a transmission manner of the first measurement results includes at least one of:
reporting based on a plurality of reporting instances, the first measurement results being divided into the plurality of reporting instances.

In some embodiments, the second communication unit 2701 is further configured to receive fifth information sent by the network device, wherein the fifth information is used to indicate a target spatial filter, and is related to the first prediction information.

In some embodiments, if the target spatial filter does not belong to the first spatial filter, the fifth information is further used to indicate a first measurement resource that is used for measurement of the target spatial filter and/or reporting of measurement results.

In some embodiments, the second communication unit 2701 is further configured to receive third configuration information sent by the network device, wherein the third configuration information is used to configure a first set including second measurement resources corresponding to the one or more first spatial filters.

In some embodiments, the third configuration information is further used to configure:
a third uplink resource used to report the one or more first measurement results.

In some embodiments, the second communication unit 2701 is further configured to send sixth information to a network device, wherein the sixth information is used to indicate one or more of following capabilities of the terminal device:
whether the terminal device supports obtaining the one or more first measurement results through measurement;
a first number, which is a number of second measurement resources supported by the terminal device on one carrier, the second measurement resources corresponding to the first spatial filter;
a third number, which is a number of the second measurement resources supported by the terminal device on all carriers.

In the embodiment of the disclosure, the second communication unit may be implemented by a transceiver in the terminal device.

FIG. 28 is a schematic structural diagram of a network device according to an embodiment of the disclosure. As shown in FIG. 28, the network device 2800 includes a third communication unit 2801 and a second processing unit 2802.

The third communication unit is configured to receive one or more first measurement results sent by a terminal device, wherein the first measurement result is a measurement result obtained by measuring a first spatial filter.

The second processing unit 2802 is configured to predict first prediction information based on the one or more first measurement results, wherein the first prediction information is related to one or more first prediction results, the first prediction result being a measurement result of a second spatial filter predicted based on the one or more first measurement results.

In some embodiments, the first prediction information includes one or more of:
first indication information for indicating whether one or more first spatial filter management events have occurred, the first spatial filter management event being related to the first prediction result;
second indication information for indicating an event type of the first spatial filter management event;
first information of a serving spatial filter corresponding to the first spatial filter management event; and
first information of a candidate spatial filter corresponding to the first spatial filter management event.

In some embodiments, the one or more first spatial filter management events include one or more of:
one or more second spatial filters corresponding to the one or more first spatial filter management events include a serving spatial filter, and performance of the serving spatial filter is better than a first threshold;
the one or more second spatial filters include the serving spatial filter, and the performance of the serving spatial filter is weaker than a second threshold;
the one or more second spatial filters include a candidate spatial filter of a serving cell and the serving spatial filter, and performance of the candidate spatial filter of the serving cell is better than first spatial filter performance, the first spatial filter performance being the performance of the serving spatial filter plus a first offset amount;
the one or more second spatial filters include a candidate spatial filter of a candidate cell and the serving spatial filter, and performance of the candidate spatial filter of the candidate cell is better than second spatial filter performance, the second spatial filter performance being the performance of the serving spatial filter plus a second offset amount;
the one or more second spatial filters include the candidate spatial filter of the serving cell, and the performance of the candidate spatial filter of the serving cell is better than a third threshold;
the one or more second spatial filters include the candidate spatial filter of the candidate cell, and the performance of the candidate spatial filter of the candidate cell is better than a fourth threshold;
the one or more second spatial filters include the serving spatial filter and the candidate spatial filter of the serving cell, the performance of the serving spatial filter is weaker than a fifth threshold, and the performance of the candidate spatial filter of the serving cell is better than a sixth threshold;
the one or more second spatial filters include the serving spatial filter and the candidate spatial filter of the candidate cell, the performance of the serving spatial filter is weaker than a seventh threshold, and the performance of the candidate spatial filter of the candidate cell is better than an eighth threshold;
the one or more second spatial filters include the serving spatial filter, and a performance fluctuation of the serving spatial filter exceeds a first range;
the one or more second spatial filters include the candidate spatial filter of the serving cell, and an interference of the candidate spatial filter of the serving cell is stronger than a first interference threshold; and
the one or more second spatial filters include the candidate spatial filter of the candidate cell, and an interference of the candidate spatial filter of the candidate cell is stronger than a second interference threshold.

In some embodiments, the performance fluctuation includes one or more of:
a number of times that a link quality fluctuates at a ninth threshold within a first time length;
a duration for which the link quality is less than a tenth threshold within a second time length; and
a ratio of a duration for which the link quality is less than an eleventh threshold within a third time length to a total time length.

In some embodiments, the first information includes one or more of:
a cell index;
a spatial filter index; and
a spatial filter link quality.

In some embodiments, a transmission manner of the first measurement results includes at least one of:
reporting based on a plurality of reporting instances, the first measurement results being divided into the plurality of reporting instances.

In some embodiments, the third communication unit 2801 is further configured to send fifth information to the terminal device, wherein the fifth information is used to indicate a target spatial filter, and is related to the first prediction information.

In some embodiments, if the target spatial filter does not belong to the first spatial filter, the fifth information is further used to indicate a first measurement resource that is used for measurement of the target spatial filter and/or reporting of measurement results.

In some embodiments, the third communication unit 2801 is further configured to sending third configuration information to the terminal device, wherein the third configuration information is used to configure a first set including second measurement resources corresponding to the one or more first spatial filters.

In some embodiments, the third configuration information is further used to configure:
a third uplink resource used to report the one or more first measurement results.

In some embodiments, the third communication unit 2801 is further configured to receive sixth information sent by the terminal device, wherein the sixth information is used to indicate one or more of following capabilities of the terminal device:
whether the terminal device supports obtaining the one or more first measurement results through measurement;
a first number, which is a number of second measurement resources supported by the terminal device on one carrier, the second measurement resources corresponding to the first spatial filter;
a third number, which is a number of the second measurement resources supported by the terminal device on all carriers.

In the embodiment of the disclosure, the third communication unit may be implemented by a transceiver in the network device, and the second processing unit may be implemented by a processor in the network device.

Those skilled in the art should understand that the related description of the above-described wireless communication apparatuses according to the embodiments of the disclosure can be understood with reference to the related description of the wireless communication methods according to the embodiments of the disclosure.

FIG. 29 is a schematic structural diagram of a communication device 2900 according to an embodiment of the disclosure. The communication device may be a terminal device or a network device. The communication device 2900 illustrated in FIG. 29 includes a processor 2910 that can invoke and run a computer program from a memory to perform the method in the embodiments of the disclosure.

Optionally, as shown in FIG. 29, the communication device 2900 may further include a memory 2920. The processor 2910 may invoke and run a computer program from the memory 2920 to perform the method in the embodiments of the disclosure.

The memory 2920 can be a separate device independent of the processor 2910, or it can be integrated within the processor 2910.

Optionally, as shown in FIG. 29, the communication device 2900 may further include a transceiver 2930, and the processor 2910 may control the transceiver 2930 to communicate with other devices, specifically, may transmit information or data to other devices, or receive information or data transmitted by other devices.

Transceiver 2930 may include a transmitter and a receiver. The transceiver 2930 may further include antennas, and the number of antennas may be one or more.

Optionally, the communication device 2900 may specifically be the network device of the embodiments of the disclosure, and the communication device 2900 may perform corresponding procedures performed by the network device in each method of the embodiments of the disclosure, which will not be repeated here for the sake of brevity.

Optionally, the communication device 2900 may specifically be the mobile terminal/terminal device of the embodiments of the disclosure, and the communication device 2900 may perform corresponding procedures performed by the mobile terminal/terminal device in each method of the embodiments of the disclosure, which will not be repeated here for the sake of brevity.

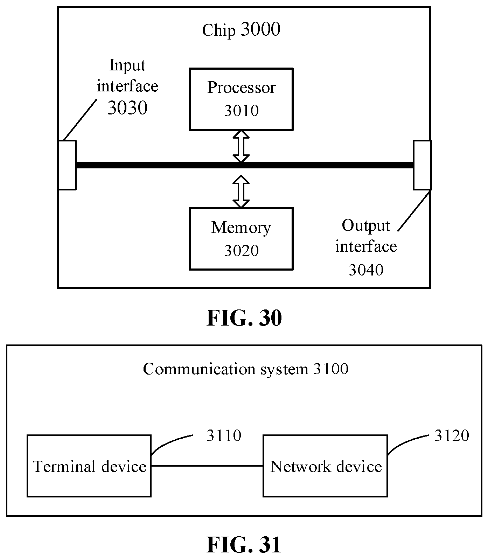

FIG. 30 is a schematic structural diagram of a chip according to an embodiment of the disclosure. The chip 2000 shown in FIG. 30 includes a processor 3010 that can invoke and run a computer program from a memory to perform the method in the embodiments of the disclosure.

Optionally, as shown in FIG. 30, the chip 3000 may further include a memory 3020. The processor 3010 may invoke and run a computer program from the memory 3020 to perform the method in the embodiments of the disclosure.

The memory 3020 can be a separate device independent of the processor 3010, or it can be integrated within the processor 3010.

Optionally, the chip 3000 may further include an input interface 3030. The processor 3010 may control the input interface 3030 to communicate with other devices or chips, specifically, may acquire information or data transmitted by other devices or chips.

Optionally, the chip 3000 may further include an output interface 3040. The processor 3010 may control the output interface 3040 to communicate with other devices or chips, specifically, may output information or data to other devices or chips.

Optionally, the chip can be applied to the network device in the embodiments of the disclosure, and the chip can perform corresponding procedures performed by the network device in each method of the embodiments of the disclosure. For brevity, details thereof are not repeated here.

Optionally, the chip can be applied to the mobile terminal/terminal device in the embodiments of the disclosure, and the chip can perform corresponding procedures performed by the mobile terminal/terminal device in each method of the embodiments of the disclosure, which will not be repeatedly described here for the sake of simplicity.

It should be understood that the chip mentioned in the embodiments of the disclosure may also be referred to as system-level chip, system chip, chip system, or System-on-Chip (SoC), among other terms.

FIG. 31 is a schematic block diagram of a communication system 3100 according to an embodiment of the disclosure. As shown in FIG. 31, the communication system 3100 includes a terminal device 3110 and a network device 3120.

The terminal device 3110 may be used to implement the corresponding functions implemented by the terminal device in the above-described method, and the network device 3120 may be used to implement the corresponding functions implemented by the network device in the above-described method. For brevity, details thereof are not repeated here.

It should be understood that the processor of the embodiments of the disclosure may be an integrated circuit chip having signal processing capabilities. In the implementation process, the steps of the above-described method embodiments may be performed by integrated logic circuits of hardware in the processor or instructions in the form of software. The processor may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, steps, and logical block diagrams disclosed in the embodiments of the disclosure may be implemented or executed. The general-purpose processor may be a microprocessor, or the processor may be any conventional processor or the like. The steps of the method disclosed in the embodiments of the disclosure may be directly embodied as execution by a hardware decoding processor, or execution by hardware and software modules in the decoding processor. The software module may be located in a mature storage medium in the art, such as random access memory, flash memory, read-only memory, programmable read-only memory, electrically erasable and writable programmable memory, or register, etc. The storage medium is located in the memory, and the processor reads the information in the memory, and performs the steps of the above methods in combination with its hardware.

It can be understood that the memory in the embodiments of the disclosure may be either volatile memory or non-volatile memory, or may include both volatile and non-volatile memories. The non-volatile memory can be Read-Only Memory (ROM), Programmable ROM (PROM), Erasable Programmable ROM (EPROM), Electrically Erasable Programmable ROM (EEPROM), or Flash memory. The volatile memory can be Random Access Memory (RAM), which serves as external high-speed cache. By way of illustration, but not by way of limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Synchlink Dynamic Random Access Memory (SLDRAM), and Direct Rambus Random Access Memory (DR RAM). It should be noted that the memory of the systems and methods described herein is intended to include, but is not limited to, these and any other suitable type of memory.

It should be understood that the above memory is illustrative but not limiting, for example, the memory in the embodiments of the disclosure may also be Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), SynchLink Dynamic Random Access Memory (SLDRAM), Direct Rambus Random Access Memory (DR RAM), and so on. In other words, the memory in the embodiments of the application is intended to include, but is not limited to, these and any other suitable types of memory.

An embodiment of the disclosure further provides a computer-readable storage medium for storing a computer program.

Optionally, the computer-readable storage medium can be applied to the network device in the embodiments of the disclosure, and the computer program enables the computer to perform corresponding procedures performed by the network device in various methods described in the embodiments of the disclosure. For brevity, details thereof are not repeated here.

Optionally, the computer-readable storage medium can be applied to the mobile terminal/terminal device in the embodiments of the disclosure, and the computer program enables the computer to perform corresponding procedures performed by the mobile terminal/terminal device in various methods described in the embodiments of the disclosure. For brevity, details thereof are not repeated here.

An embodiment of the disclosure further provides a computer program product including computer program instructions.

Optionally, the computer program product can be applied to the network device in the embodiments of the disclosure, and the computer program instructions enable the computer to perform the corresponding procedures performed by the network device in various methods described in the embodiments of the disclosure. For brevity, details thereof are not repeated here.

Optionally, the computer program product can be applied to the mobile terminal/terminal device in the embodiments of the disclosure, and the computer program instructions enable the computer to perform the corresponding procedures performed by the mobile terminal/terminal device in various methods described in the embodiments of the disclosure. For brevity, details thereof are not repeated here.

An embodiment of the disclosure further provides a computer program.

Optionally, the computer program can be applied to the network device in the embodiments of the disclosure, and the computer program, when run on a computer, enables the computer to perform corresponding procedures performed by the network device in various methods described in the embodiments of the disclosure. For brevity, details thereof are not repeated here.

Optionally, the computer program can be applied to the mobile terminal/terminal device in the embodiments of the disclosure, and when run on a computer, the computer program enables the computer to perform the corresponding procedures performed by the terminal in various methods described in the embodiments of the disclosure. For brevity, details thereof are not repeated here.

Those of ordinary skill in the art will appreciate that the units and algorithmic steps of the various examples described in the embodiments disclosed herein can be implemented in electronic hardware, in computer software, or in a combination of computer software and electronic hardware. Whether these functions are performed in hardware or software depends on the specific application and design constraints of the technical solution. Those skilled in the art may use different methods for implementing the described functions for each particular application, but such implementations should not be considered as going beyond the scope of the disclosure.

Those skilled in the art can clearly understand that for convenience and conciseness of the description, for the specific working processes of the systems, devices, and units described above, reference may be made to the corresponding processes in the aforementioned method embodiments, which will not be repeatedly described herein.

In the several embodiments provided in the present disclosure, it is to be understood that the disclosed systems, devices and method may be implemented in other modes. For example, the device embodiments described above are only schematic, and for example, division of the units is only logic function division, and other division manners may be adopted during practical implementation. For example, multiple units or components may be combined or integrated into another system, or some features may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

When the aforementioned functions are implemented in the form of software functional units and sold or used as independent products, the software functional units can be stored in a computer-readable storage medium. Based on this understanding, the core or contributory part of the technical solution of the disclosure with respect to the prior part, or portions thereof, can be embodied in the form of a software product. This computer software product is stored in a storage medium and includes several instructions that enable a computer device (which can be a personal computer, server, network device, etc.) to perform all or part of the steps described in the various embodiments of the disclosure. The storage medium includes various media capable of storing program codes, such as USB flash drive, mobile hard disk, Read-Only Memory (ROM), Random Access Memory (RAM), magnetic disk or an optical disk.

What described above are only the specific implementations of the present disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A wireless communication method, comprising:
predicting, by a terminal device, first prediction information based on one or more first measurement results, wherein the first measurement result is a measurement result obtained by measuring a first spatial filter, and the first prediction information is related to one or more first prediction results, the first prediction result being a measurement result of a second spatial filter predicted based on the one or more first measurement results.

2. The method of claim 1, wherein the first prediction information comprises one or more of:
first indication information for indicating whether one or more first spatial filter management events have occurred, the first spatial filter management event being related to the first prediction result;
second indication information for indicating an event type of the first spatial filter management event that has occurred;
first information of a serving spatial filter corresponding to the first spatial filter management event;
first information of a candidate spatial filter corresponding to the first spatial filter management event;
a Timing Advance (TA) of the candidate spatial filter corresponding to the first spatial filter management event; and
a power control parameter of the candidate spatial filter corresponding to the first spatial filter management event.

3. The method of claim 2, wherein the one or more first spatial filter management events are spatial filter management events configured or defined by a network device.

4. The method of any one of claims 2 to 3, wherein the one or more first spatial filter management events comprise one or more of:
one or more second spatial filters corresponding to the one or more first spatial filter management events comprise a serving spatial filter, and performance of the serving spatial filter is better than a first threshold;
the one or more second spatial filters comprise the serving spatial filter, and the performance of the serving spatial filter is weaker than a second threshold;
the one or more second spatial filters comprise a candidate spatial filter of a serving cell and the serving spatial filter, and performance of the candidate spatial filter of the serving cell is better than first spatial filter performance, the first spatial filter performance being the performance of the serving spatial filter plus a first offset amount;
the one or more second spatial filters comprise a candidate spatial filter of a candidate cell and the serving spatial filter, and performance of the candidate spatial filter of the candidate cell is better than second spatial filter performance, the second spatial filter performance being the performance of the serving spatial filter plus a second offset amount;
the one or more second spatial filters comprise the candidate spatial filter of the serving cell, and the performance of the candidate spatial filter of the serving cell is better than a third threshold;
the one or more second spatial filters comprise the candidate spatial filter of the candidate cell, and the performance of the candidate spatial filter of the candidate cell is better than a fourth threshold;
the one or more second spatial filters comprise the serving spatial filter and the candidate spatial filter of the serving cell, the performance of the serving spatial filter is weaker than a fifth threshold, and the performance of the candidate spatial filter of the serving cell is better than a sixth threshold;
the one or more second spatial filters comprise the serving spatial filter and the candidate spatial filter of the candidate cell, the performance of the serving spatial filter is weaker than a seventh threshold, and the performance of the candidate spatial filter of the candidate cell is better than an eighth threshold;
the one or more second spatial filters comprise the serving spatial filter, and a performance fluctuation of the serving spatial filter exceeds a first range;
the one or more second spatial filters comprise the candidate spatial filter of the serving cell, and an interference of the candidate spatial filter of the serving cell is stronger than a first interference threshold; and
the one or more second spatial filters comprise the candidate spatial filter of the candidate cell, and an interference of the candidate spatial filter of the candidate cell is stronger than a second interference threshold.

5. The method of claim 4, wherein the performance fluctuation comprises one or more of:
a number of times that a link quality fluctuates at a ninth threshold within a first time length;
a duration for which the link quality is less than a tenth threshold within a second time length; and
a ratio of a duration for which the link quality is less than an eleventh threshold within a third time length to a total time length.

6. The method of any one of claims 2 to 5, further comprising:
sending, by the terminal device, second information to a network device, wherein the second information is used to indicate a second spatial filter management event, and the second spatial filter management event is the first spatial filter management event that is to be reported.

7. The method of claim 6, wherein the second spatial filter management event is:
determined by the terminal device; or,
indicated by the network device; or,
predefined.

8. The method of claim 6, wherein the second information is transmitted through Uplink Control Information (UCI).

9. The method of any one of claims 6 to 8, wherein for one second spatial filter management event, the second information comprises one or more of:
third indication information for indicating an event type of the second spatial filter management event;
first information of a serving spatial filter corresponding to the second spatial filter management event;
first information of a candidate spatial filter corresponding to the second spatial filter management event;
a TA of the candidate spatial filter corresponding to the second spatial filter management event; and
a power control parameter of the candidate spatial filter corresponding to the second spatial filter management event.

10. The method of any one of claims 2 to 9, wherein the first information comprises one or more of:
a cell index;
a spatial filter index; and
a spatial filter link quality.

11. The method of any one of claims 2 to 10, wherein the power control parameter comprises one or more of:
Path Loss Reference Signal (PL RS);
target received power on a Physical Resource Block (PRB);
compensation factor for path loss; and
closed-loop power control indication.

12. The method of any one of claims 6 to 9, further comprising:
receiving, by the terminal device, first configuration information sent by the network device, wherein the first configuration information is used to configure a first uplink resource, the first uplink resource being used to transmit the second information.

13. The method of claim 12, further comprising:
sending, by the terminal device, a first request to the network device, the first request being used to request the first uplink resource.

14. The method of claim 13, wherein the first request is sent before or after the second spatial filter management event is determined.

15. The method of any one of claims 6 to 9 and 12 to 14, further comprising:
receiving, by the terminal device, third information sent by the network device, wherein the third information is used to indicate a target spatial filter, and is related to the second information.

16. The method of claim 15, wherein if the target spatial filter does not belong to the first spatial filter, the third information is further used to indicate a first measurement resource that is used for measurement of the target spatial filter and/or reporting of measurement results.

17. The method of any one of claims 1 to 16, further comprising:
receiving, by the terminal device, second configuration information sent by the network device, wherein the second configuration information is used to configure a first set and a second set, the first set comprises second measurement resources corresponding to the one or more first spatial filters, and the second set comprises prediction resources corresponding to one or more third spatial filters, the second spatial filter being one of the one or more third spatial filters.

18. The method of claim 17, wherein no identical resource exists between the second measurement resources comprised in the first set and the prediction resources comprised in the second set.

19. The method of any one of claim 17, wherein the first set is a subset of the second set.

20. The method of any one of claims 17 to 19, wherein the second configuration information is further used to configure one or more of:
a third spatial filter management event, which is a spatial filter management event for which the one or more first measurement results are used for prediction; and
a first uplink resource or a second uplink resource, wherein the first uplink resource is used to report a spatial filter management event, and the second uplink resource is used to transmit a first request that is used to request the first uplink resource.

21. The method of any one of claims 1 to 20, further comprising:
sending, by the terminal device, fourth information to a network device, wherein the fourth information is used to indicate one or more of following capabilities of the terminal device:
whether the terminal device supports obtaining the one or more first measurement results through measurement and/or supports predicting the first prediction information based on the one or more first measurement results;
one or more fourth spatial filter management events, which are spatial filter management event supported being predicted by the one or more first measurement results;
a first number, which is a number of second measurement resources supported by the terminal device on one carrier, the second measurement resources corresponding to the first spatial filter;
a second number, which is a number of prediction resources supported by the terminal device on one carrier, the prediction resources corresponding to the second spatial filter;
a third number, which is a number of the second measurement resources supported by the terminal device on all carriers; and
a fourth number, which is a number of the prediction resources supported by the terminal device on all carriers.

22. A wireless communication method, comprising:
receiving, by a network device, second information sent by a terminal device, wherein the second information is used to indicate a second spatial filter management event, which is a first spatial filter management event that is to be reported, the first spatial filter management event is related to a first prediction result, and the first prediction result is a measurement result of a second spatial filter predicted based on one or more first measurement results, the first measurement result being a measurement result obtained by measuring a first spatial filter,
wherein the one or more first measurement results are used by the terminal device to predict first prediction information related to one or more first prediction results.

23. The method of claim 22, wherein the first prediction information comprises one or more of:
first indication information for indicating whether one or more first spatial filter management events have occurred, the first spatial filter management event being related to the first prediction result;
second indication information for indicating an event type of the first spatial filter management event that has occurred;
first information of a serving spatial filter corresponding to the first spatial filter management event;
first information of a candidate spatial filter corresponding to the first spatial filter management event;
a Timing Advance (TA) of the candidate spatial filter corresponding to the first spatial filter management event; and
a power control parameter of the candidate spatial filter corresponding to the first spatial filter management event.

24. The method of claim 23, wherein the one or more first spatial filter management events are spatial filter management events configured or defined by a network device.

25. The method of any one of claims 23 to 24, wherein the one or more first spatial filter management events comprise one or more of:
one or more second spatial filters corresponding to the one or more first spatial filter management events comprise a serving spatial filter, and performance of the serving spatial filter is better than a first threshold;
the one or more second spatial filters comprise the serving spatial filter, and the performance of the serving spatial filter is weaker than a second threshold;
the one or more second spatial filters comprise a candidate spatial filter of a serving cell and the serving spatial filter, and performance of the candidate spatial filter of the serving cell is better than first spatial filter performance, the first spatial filter performance being the performance of the serving spatial filter plus a first offset amount;
the one or more second spatial filters comprise a candidate spatial filter of a candidate cell and the serving spatial filter, and performance of the candidate spatial filter of the candidate cell is better than second spatial filter performance, the second spatial filter performance being the performance of the serving spatial filter plus a second offset amount;
the one or more second spatial filters comprise the candidate spatial filter of the serving cell, and the performance of the candidate spatial filter of the serving cell is better than a third threshold;
the one or more second spatial filters comprise the candidate spatial filter of the candidate cell, and the performance of the candidate spatial filter of the candidate cell is better than a fourth threshold;
the one or more second spatial filters comprise the serving spatial filter and the candidate spatial filter of the serving cell, the performance of the serving spatial filter is weaker than a fifth threshold, and the performance of the candidate spatial filter of the serving cell is better than a sixth threshold;
the one or more second spatial filters comprise the serving spatial filter and the candidate spatial filter of the candidate cell, the performance of the serving spatial filter is weaker than a seventh threshold, and the performance of the candidate spatial filter of the candidate cell is better than an eighth threshold;
the one or more second spatial filters comprise the serving spatial filter, and a performance fluctuation of the serving spatial filter exceeds a first range;
the one or more second spatial filters comprise the candidate spatial filter of the serving cell, and an interference of the candidate spatial filter of the serving cell is stronger than a first interference threshold; and
the one or more second spatial filters comprise the candidate spatial filter of the candidate cell, and an interference of the candidate spatial filter of the candidate cell is stronger than a second interference threshold.

26. The method of claim 25, wherein the performance fluctuation comprises one or more of:
a number of times that a link quality fluctuates at a ninth threshold within a first time length;
a duration for which the link quality is less than a tenth threshold within a second time length; and
a ratio of a duration for which the link quality is less than an eleventh threshold within a third time length to a total time length.

27. The method of any one of claims and 22 to 26, wherein the second spatial filter management event is:
determined by the terminal device; or,
indicated by the network device; or,
predefined.

28. The method of any one of claims 22 to 27, wherein the second information is transmitted through Uplink Control Information (UCI).

29. The method of any one of claims 22 to 28, wherein for one second spatial filter management event, the second information comprises one or more of:
third indication information for indicating an event type of the second spatial filter management event;
first information of a serving spatial filter corresponding to the second spatial filter management event;
first information of a candidate spatial filter corresponding to the second spatial filter management event;
a TA of the candidate spatial filter corresponding to the second spatial filter management event; and
a power control parameter of the candidate spatial filter corresponding to the second spatial filter management event.

30. The method of any one of claims 23 to 26 and 29, wherein the first information comprises one or more of:
a cell index;
a spatial filter index; and
a spatial filter link quality.

31. The method of any one of claims 23 to 26, 29, wherein the power control parameter comprises one or more of:
Path Loss Reference Signal (PL RS);
target received power on a Physical Resource Block (PRB);
compensation factor for path loss; and
closed-loop power control indication.

32. The method of any one of claims 22 to 31, further comprising:
sending, by the network device, first configuration information to the terminal device, wherein the first configuration information is used to configure a first uplink resource, the first uplink resource being used to transmit the second information.

33. The method of claim 32, further comprising:
receiving, by the network device, a first request sent by the terminal device, the first request being used to request the first uplink resource.

34. The method of claim 33, wherein the first request is sent before or after the second spatial filter management event is determined.

35. The method of any one of claims 22 to 34, further comprising:
sending, by the network device, third information to the terminal device, wherein the third information is used to indicate a target spatial filter, and is related to the second information.

36. The method of claim 35, wherein if the target spatial filter does not belong to the first spatial filter, the third information is further used to indicate a first measurement resource that is used for measurement of the target spatial filter and/or reporting of measurement results.

37. The method of any one of claims 22 to 36, further comprising:
sending, by the network device, second configuration information to the terminal device, wherein the second configuration information is used to configure a first set and a second set, the first set comprises second measurement resources corresponding to the one or more first spatial filters, and the second set comprises prediction resources corresponding to one or more third spatial filters, the second spatial filter being one of the one or more third spatial filters.

38. The method of claim 37, wherein no identical resource exists between the second measurement resources comprised in the first set and the prediction resources comprised in the second set.

39. The method of any one of claim 37, wherein the first set is a subset of the second set.

40. The method of any one of claims 37 to 39, wherein the second configuration information is further used to configure one or more of:
a third spatial filter management event, which is a spatial filter management event for which the one or more first measurement results are used for prediction; and
a first uplink resource or a second uplink resource, wherein the first uplink resource is used to report a spatial filter management event, and the second uplink resource is used to transmit a first request that is used to request the first uplink resource.

41. The method of any one of claims 22 to 40, further comprising:
receiving, by the network device, fourth information sent by the terminal device, wherein the fourth information is used to indicate one or more of following capabilities of the terminal device:
whether the terminal device supports obtaining the one or more first measurement results through measurement and/or supports predicting the first prediction information based on the one or more first measurement results;
one or more fourth spatial filter management events, which are spatial filter management event supported being predicted by the one or more first measurement results;
a first number, which is a number of second measurement resources supported by the terminal device on one carrier, the second measurement resources corresponding to the first spatial filter;
a second number, which is a number of prediction resources supported by the terminal device on one carrier, the prediction resources corresponding to the second spatial filter;
a third number, which is a number of the second measurement resources supported by the terminal device on all carriers; and
a fourth number, which is a number of the prediction resources supported by the terminal device on all carriers.

42. A wireless communication method, comprising:
sending, by a terminal device, one or more first measurement results to a network device, wherein the first measurement result is a measurement result obtained by measuring a first spatial filter,
wherein the one or more first measurement results are used by the network device to predict first prediction information, and the first prediction information is related to one or more first prediction results, the first prediction result being a measurement result of a second spatial filter predicted based on the one or more first measurement results.

43. The method of claim 42, wherein the first prediction information comprises one or more of:
first indication information for indicating whether one or more first spatial filter management events have occurred, the first spatial filter management event being related to the first prediction result;
second indication information for indicating an event type of the first spatial filter management event;
first information of a serving spatial filter corresponding to the first spatial filter management event; and
first information of a candidate spatial filter corresponding to the first spatial filter management event.

44. The method of claim 43, wherein the one or more first spatial filter management events comprise one or more of:
one or more second spatial filters corresponding to the one or more first spatial filter management events comprise a serving spatial filter, and performance of the serving spatial filter is better than a first threshold;
the one or more second spatial filters comprise the serving spatial filter, and the performance of the serving spatial filter is weaker than a second threshold;
the one or more second spatial filters comprise a candidate spatial filter of a serving cell and the serving spatial filter, and performance of the candidate spatial filter of the serving cell is better than first spatial filter performance, the first spatial filter performance being the performance of the serving spatial filter plus a first offset amount;
the one or more second spatial filters comprise a candidate spatial filter of a candidate cell and the serving spatial filter, and performance of the candidate spatial filter of the candidate cell is better than second spatial filter performance, the second spatial filter performance being the performance of the serving spatial filter plus a second offset amount;
the one or more second spatial filters comprise the candidate spatial filter of the serving cell, and the performance of the candidate spatial filter of the serving cell is better than a third threshold;
the one or more second spatial filters comprise the candidate spatial filter of the candidate cell, and the performance of the candidate spatial filter of the candidate cell is better than a fourth threshold;
the one or more second spatial filters comprise the serving spatial filter and the candidate spatial filter of the serving cell, the performance of the serving spatial filter is weaker than a fifth threshold, and the performance of the candidate spatial filter of the serving cell is better than a sixth threshold;
the one or more second spatial filters comprise the serving spatial filter and the candidate spatial filter of the candidate cell, the performance of the serving spatial filter is weaker than a seventh threshold, and the performance of the candidate spatial filter of the candidate cell is better than an eighth threshold;
the one or more second spatial filters comprise the serving spatial filter, and a performance fluctuation of the serving spatial filter exceeds a first range;
the one or more second spatial filters comprise the candidate spatial filter of the serving cell, and an interference of the candidate spatial filter of the serving cell is stronger than a first interference threshold; and
the one or more second spatial filters comprise the candidate spatial filter of the candidate cell, and an interference of the candidate spatial filter of the candidate cell is stronger than a second interference threshold.

45. The method of claim 44, wherein the performance fluctuation comprises one or more of:
a number of times that a link quality fluctuates at a ninth threshold within a first time length;
a duration for which the link quality is less than a tenth threshold within a second time length; and
a ratio of a duration for which the link quality is less than an eleventh threshold within a third time length to a total time length.

46. The method of any one of claims 43 to 45, wherein the first information comprises one or more of:
a cell index;
a spatial filter index; and
a spatial filter link quality.

47. The method of any one of claims 42 to 46, wherein a transmission manner of the first measurement results comprises at least one of:
reporting based on a plurality of reporting instances, the first measurement results being divided into the plurality of reporting instances.

48. The method of any one of claims 42 to 47, further comprising:
receiving, by the terminal device, fifth information sent by the network device, wherein the fifth information is used to indicate a target spatial filter, and is related to the first prediction information.

49. The method of claim 48, wherein if the target spatial filter does not belong to the first spatial filter, the fifth information is further used to indicate a first measurement resource that is used for measurement of the target spatial filter and/or reporting of measurement results.

50. The method of any one of claims 42 to 49, further comprising:
receiving, by the terminal device, third configuration information sent by the network device, wherein the third configuration information is used to configure a first set comprising second measurement resources corresponding to the one or more first spatial filters.

51. The method of claim 50, wherein the third configuration information is further used to configure:
a third uplink resource used to report the one or more first measurement results.

52. The method of any one of claims 42 to 51, further comprising:
sending, by the terminal device, sixth information to a network device, wherein the sixth information is used to indicate one or more of following capabilities of the terminal device:
whether the terminal device supports obtaining the one or more first measurement results through measurement;
a first number, which is a number of second measurement resources supported by the terminal device on one carrier, the second measurement resources corresponding to the first spatial filter;
a third number, which is a number of the second measurement resources supported by the terminal device on all carriers.

53. A wireless communication method, comprising:
receiving, by a network device, one or more first measurement results sent by a terminal device, wherein the first measurement result is a measurement result obtained by measuring a first spatial filter; and
predicting, by the network device, first prediction information based on the one or more first measurement results, wherein the first prediction information is related to one or more first prediction results, the first prediction result being a measurement result of a second spatial filter predicted based on the one or more first measurement results.

54. The method of claim 53, wherein the first prediction information comprises one or more of:
first indication information for indicating whether one or more first spatial filter management events have occurred, the first spatial filter management event being related to the first prediction result;
second indication information for indicating an event type of the first spatial filter management event;
first information of a serving spatial filter corresponding to the first spatial filter management event; and
first information of a candidate spatial filter corresponding to the first spatial filter management event.

55. The method of claim 54, wherein the one or more first spatial filter management events comprise one or more of:
one or more second spatial filters corresponding to the one or more first spatial filter management events comprise a serving spatial filter, and performance of the serving spatial filter is better than a first threshold;
the one or more second spatial filters comprise the serving spatial filter, and the performance of the serving spatial filter is weaker than a second threshold;
the one or more second spatial filters comprise a candidate spatial filter of a serving cell and the serving spatial filter, and performance of the candidate spatial filter of the serving cell is better than first spatial filter performance, the first spatial filter performance being the performance of the serving spatial filter plus a first offset amount;
the one or more second spatial filters comprise a candidate spatial filter of a candidate cell and the serving spatial filter, and performance of the candidate spatial filter of the candidate cell is better than second spatial filter performance, the second spatial filter performance being the performance of the serving spatial filter plus a second offset amount;
the one or more second spatial filters comprise the candidate spatial filter of the serving cell, and the performance of the candidate spatial filter of the serving cell is better than a third threshold;
the one or more second spatial filters comprise the candidate spatial filter of the candidate cell, and the performance of the candidate spatial filter of the candidate cell is better than a fourth threshold;
the one or more second spatial filters comprise the serving spatial filter and the candidate spatial filter of the serving cell, the performance of the serving spatial filter is weaker than a fifth threshold, and the performance of the candidate spatial filter of the serving cell is better than a sixth threshold;
the one or more second spatial filters comprise the serving spatial filter and the candidate spatial filter of the candidate cell, the performance of the serving spatial filter is weaker than a seventh threshold, and the performance of the candidate spatial filter of the candidate cell is better than an eighth threshold;
the one or more second spatial filters comprise the serving spatial filter, and a performance fluctuation of the serving spatial filter exceeds a first range;
the one or more second spatial filters comprise the candidate spatial filter of the serving cell, and an interference of the candidate spatial filter of the serving cell is stronger than a first interference threshold; and
the one or more second spatial filters comprise the candidate spatial filter of the candidate cell, and an interference of the candidate spatial filter of the candidate cell is stronger than a second interference threshold.

56. The method of claim 55, wherein the performance fluctuation comprises one or more of:
a number of times that a link quality fluctuates at a ninth threshold within a first time length;
a duration for which the link quality is less than a tenth threshold within a second time length; and
a ratio of a duration for which the link quality is less than an eleventh threshold within a third time length to a total time length.

57. The method of any one of claims 54 to 56, wherein the first information comprises one or more of:
a cell index;
a spatial filter index; and
a spatial filter link quality.

58. The method of any one of claims 53 to 57, wherein a transmission manner of the first measurement results comprises at least one of:
reporting based on a plurality of reporting instances, the first measurement results being divided into the plurality of reporting instances.

59. The method of any one of claims 53 to 58, further comprising:
sending, by the network device, fifth information to the terminal device, wherein the fifth information is used to indicate a target spatial filter, and is related to the first prediction information.

60. The method of claim 59, wherein if the target spatial filter does not belong to the first spatial filter, the fifth information is further used to indicate a first measurement resource that is used for measurement of the target spatial filter and/or reporting of measurement results.

61. The method of any one of claims 53 to 60, further comprising:
sending, by the network device, third configuration information to the terminal device, wherein the third configuration information is used to configure a first set comprising second measurement resources corresponding to the one or more first spatial filters.

62. The method of claim 61, wherein the third configuration information is further used to configure:
a third uplink resource used to report the one or more first measurement results.

63. The method of any one of claims 53 to 62, further comprising:
receiving, by the network device, sixth information sent by the terminal device, wherein the sixth information is used to indicate one or more of following capabilities of the terminal device:
whether the terminal device supports obtaining the one or more first measurement results through measurement;
a first number, which is a number of second measurement resources supported by the terminal device on one carrier, the second measurement resources corresponding to the first spatial filter;
a third number, which is a number of the second measurement resources supported by the terminal device on all carriers.

64. A terminal device, comprising:
a first processing unit, configured to predict first prediction information based on one or more first measurement results, wherein the first measurement result is a measurement result obtained by measuring a first spatial filter, and the first prediction information is related to one or more first prediction results, the first prediction result being a measurement result of a second spatial filter predicted based on the one or more first measurement results.

65. A network device, comprising:
a first communication unit, configured to receive second information sent by a terminal device, wherein the second information is used to indicate a second spatial filter management event, which is a first spatial filter management event that is to be reported, the first spatial filter management event is related to a first prediction result, and the first prediction result is a measurement result of a second spatial filter predicted based on one or more first measurement results, the first measurement result being a measurement result obtained by measuring a first spatial filter,
wherein the one or more first measurement results are used by the terminal device to predict first prediction information related to one or more first prediction results.

66. A terminal device, comprising:
a second communication unit, configured to send one or more first measurement results to a network device, wherein the first measurement result is a measurement result obtained by measuring a first spatial filter,
wherein the one or more first measurement results are used by the network device to predict first prediction information, and the first prediction information is related to one or more first prediction results, the first prediction result being a measurement result of a second spatial filter predicted based on the one or more first measurement results.

67. A network device, comprising:
a third communication unit, configured to receive one or more first measurement results sent by a terminal device, wherein the first measurement result is a measurement result obtained by measuring a first spatial filter; and
a second processing unit, configured to predict first prediction information based on the one or more first measurement results, wherein the first prediction information is related to one or more first prediction results, the first prediction result being a measurement result of a second spatial filter predicted based on the one or more first measurement results.

68. A terminal device, comprising a processor, and a memory for storing a computer program, wherein the processor is configured to invoke and execute the computer program stored in the memory to perform the method of any one of claims 1 to 21, or the method of any one of claims 42 to 52.

69. A network device, comprising a processor, and a memory for storing a computer program, wherein the processor is configured to invoke and execute the computer program stored in the memory to perform the method of any one of claims 22 to 41, or the method of any one of claims 53 to 63.

70. A chip, comprising: a processor configured to invoke and execute a computer program from a memory to cause a device on which the chip is mounted to perform the method of any one of claims 1 to 21, or the method of any one of claims 22 to 41, or the method of any one of claims 42 to 52, or the method of any one of claims 53 to 63.

71. A computer-readable storage medium for storing a computer program that, when executed, causes a computer to perform the method of any one of claims 1 to 26, or the method of any one of claims 22 to 41, or the method of any one of claims 42 to 52, or the method of any one of claims 53 to 63.

72. A computer program product, comprising computer program instructions that, when executed, cause a computer to perform the method of any one of claims 1 to 26, or the method of any one of claims 22 to 41, or the method of any one of claims 42 to 52, or the method of any one of claims 53 to 63.

73. A computer program, when executed, causing a computer to perform the method of any one of claims 1 to 26, or the method of any one of claims 22 to 41, or the method of any one of claims 42 to 52, or the method of any one of claims 53 to 63.
